# EUROPEAN PATENT SPECIFICATION

(11) **EP 2 042 387 B1**
(45) Date of publication and mention of the grant of the patent: **01.02.2012**
(21) Application number: 08016289.4
(22) Date of filing: 16.09.2008
(51) Int. Cl.: B60R 21/231, B60R 21/233, B60R 21/235

(54) **Airbag for knee protection**
Airbag zum Knieschutz
Airbag pour protection des genoux

(30) Priority: 27.09.2007 JP 2007252567; 27.09.2007 JP 2007252597
(43) Date of publication of application: 01.04.2009
(73) Proprietor: Toyoda Gosei Co., Ltd., Nishikasugai-gun, Aichi 452-8564 (JP)
(72) Inventor: Imaeda, Hiroki Toyoda Gosei Co., Ltd., Aichi-ken, 452-8564 (JP); Sakakida, Katsumi c/o Toyoda Gosei Co., Ltd., Aichi-ken, 452-8564 (JP)
(74) Representative: Kramer - Barske - Schmidtchen

(56) References cited:
- EP-A- 1 544 054
- EP-A- 1 655 183
- WO-A-2007/022766
- JP-A- 2002 138 340

## Description

### BACKGROUND OF THE INVENTION

### 1. FIELD OF THE INVENTION

The present invention relates to an airbag suitable for use in a knee-protecting airbag apparatus for protecting knees of a vehicle occupant such as a driver or a front seat passenger in the event of impact of vehicle.

### 2. DESCRIPTION OF THE RELATED ART

JP 2006-131186 discloses a planar airbag for knee protection for deployment between a space between knees of a vehicle occupant and vehicle parts in a plate-like shape. The airbag includes a knee-side wall and a vehicle body side wall of the same contour connected together by a peripheral region and a tether that controls a distance between the knee-side wall and vehicle body side wall upon airbag inflation.

In order to deploy in a narrow space between knees of an occupant and vehicle parts, a conventional airbag for knee protection is designed to have a small volume of 15 to 20 liter and is made of woven fabric having a coating of silicone rubber or the like for preventing gas leakage from the small-volume bag.

Another conventional airbag for knee protection includes a first tether for reducing a thickness of a portion of the airbag contactable with shins or a region of vehicle occupant belowknees so the airbagmaypress the shins as little as possible when receiving the knees. With only one tether, another region of the airbag projecting from an airbag housing proximate the housing at airbag inflation may bulge in lieu of the above region and press the shins. To prevent this, the airbag includes below the first tether an additional tether for preventing that region of the airbag from bulging and pressing the shins. That is, the conventional airbag includes two tethers located one above the other.

The latter airbag has a coating for preventing gas leakage and abrupt drop in the inner pressure since the airbag is designed to be thin and have a small volume with the two tethers and therefore may easily lose the inner pressure if gas leaks.

The design of the conventional airbag that has two tethers and a coating has increased time and cost for manufacturing an airbag, and therefore, there has been a demand for an airbag that has a reduced number of tethers and is made of woven fabric having no coating.

EP 1 655 183 A1 discloses a knee-protecting airbag device according to the preamble of claim 1, comprising an airbag, the airbag, when fed with inflation gas, protruding rearward from a housing and deployable upward for protecting occupant's knees, wherein the airbag comprises an upstream part located toward the lower end of the completely inflated airbag and located upstream of the inflation gas, and a downstream part located toward the upper end of the completely inflated airbag and located downstream of the inflation gas, the downstream part protecting an area from shins to knees of the occupant, when the airbag is completely inflated, the downstream part of the airbag comprises a shin-protecting area for protecting occupant's shins, and in the course of the airbag inflation, the internal pressure of the shin-protecting area peaks 5 to 15 ms later than a peak time of the internal pressure of the upstream part.

EP 1 544 054 A2 discloses a knee airbag constructed to be inflated toward the front of the legs of a vehicle occupant and adopted to be inflated from below upward, wherein in an inflated state the thickness of the knee airbag except the lateral sides is larger at the upper part than at the middle part of the vertical direction of the knee airbag.

### SUMMARY OF THE INVENTION

The object of the present invention is to provide a new airbag for knee protection that includes a reduced number of tethers and can be made of woven fabric having no coating while maintaining proper knee-arresting properties and avoiding pushing shins of a vehicle occupant.

An airbag is provided as defined by the features of claim 1.

The airbag for knee protection of the invention is mountable on a low location in front of knees of a seated vehicle occupant in a folded-up state inside a case having an emergence opening oriented rearward. When fed with inflation gas, the airbag emerges from the emergence opening and deploys upward and rearward to protect the knees of the occupant by a knee-arresting portion. An outer wall of the airbag has a planar bag shape including a knee-side wall for deployment toward the knees and a vehicle body side wall continuing from an outer edge of the knee-side wall for deployment in front of and facing the knee-side wall. The knee-side wall and the vehicle body side wall have same outer contours as are flattened and are formed by base cloths having a Frazier air permeability of 0.6 L/cm²/min and below. The airbag includes an upper inflatable chamber having a generally columnar contour that extends in a transverse direction and has an outer diameter of 150 to 220 mm when the airbag is fully inflated vertically by itself, which upper inflatable chamber acting as the knee-arresting portion for receiving entire front faces of knees and the vicinity of upper ends of shins of the occupant upon airbag deployment, a lower inflatable chamber located below the upper inflatable chamber and having a smaller volume and thickness than the upper inflatable chamber at full inflation of the airbag, the lower inflatable chamber including on the vehicle body side wall a mounting portion by which the airbag is secured to the case and being designed such that a top of a rear face of the lower inflatable chamber projecting rearward in a thickness direction of the airbag is dislocated forward relative to that of the upper inflatable chamber by 10 to 70 mm when the airbag is fully inflated vertically by itself, and a first tether extending horizontally inside the airbag. The first tether connects the knee-side wall and vehicle body side wall together by a connecting distance of 50 to 90 mm for controlling a thickness of the airbag in an opposing direction of the knee-side wall and vehicle body side wall upon airbag deployment and partitioning the upper inflatable chamber and lower inflatable chamber. The first tether is located at a location to defect from the case at full deployment of the airbag. The airbag further includes at a location of the first tether a plurality of gas communication holes for communicating the upper inflatable chamber and lower inflatable chamber. The gas communication holes are configured such that mainstreams of inflation gas heading to the upper inflatable chamber from the lower inflatable chamber are located proximate both left and right ends of the airbag so the upper inflatable chamber inflates from left and right regions to the center.

In operation, when the upper inflatable chamber acting as the knee-arresting portion receives occupant's knees by the rear face upon airbag inflation, it gets compressed and absorbs a kinetic energy of the occupant moving forward. The knee-side wall and vehicle body side wall of the upper inflatable chamber are formed by the base cloths having a Frazier air permeability of 0.6 L/cm²/min and below, and the upper inflatable chamber at full inflation has the outer diameter or thickness in the anteroposterior direction of 150 mm to 220 mm. Securing the outer diameter greater than 150 mm, the upper inflatable chamber would not bottom out, that is, the knee-side wall would not bump into the vehicle body side wall, even in the event of gas leakage. Therefore, the upper inflatable chamber will receive entire front faces of the vicinity of upper ends of shins to knees. On the other hand, since the outer diameter of the upper inflatable chamber at full inflation does not surpass 220 mm, the upper inflatable chamber is capable of entering into a gap between the knees and parts of vehicle such as a column cover, an instrument panel or a glove box smoothly even if it is narrow, and will not be likely to push back the knees intensely at full inflation.

While the upper inflatable chamber gets compressed by an impact of the knees and absorbs kinetic energy of the occupant, the lower inflatable chamber receives the shins (more precisely, main regions of the shins below the upper ends of the shins) by its rear face and gets compressed. At this time, since the lower inflatable chamber is designed such that the top of the rear face in a thickness direction of the airbag is located off to the front relative to that of the upper inflatable chamber by an offset of 10 to 70 mm when fully inflated by itself, and since the shins at the point of being thrown against the lower inflatable chamber has a reduced kinetic energy due to prior restraint by the upper inflatable chamber, an advancing stroke of the shins when received by the lower inflatable chamber is not so great.

As a result, the airbag securely receives and protects the occupant's knees avoiding pressure to the shins.

If the air permeability of the base cloths surpasses 0.6 L/cm²/min, an abrupt plunge of an inner pressure of the airbag can occur due to gas leakage especially when the upper inflatable chamber has a small volume with an outer diameter of about 150 mm. In this case, in operation, the upper inflatable chamber may not be able to reduce the kinetic energy of the occupant effectively at receiving kneepan regions though it may not press the shins too much. Therefore, the air permeability of the base cloths of the airbag is desirably 0.6 L/cm²/min and below.

With respect to the offset by which the top of the rear face of the lower inflatable chamber is located forward relative to that of the upper inflatable portion, the offset less than 10 mm may cause damages to the shins by the lower inflatable chamber. To the contrary, if the offset surpasses 70 mm, the volume of the lower inflatable chamber will be so small that the first tether can fail to defect from the case at full inflation of the airbag. If the first tether fails to emerge out of the case, the upper inflatable chamber may not be able to deploy in front of the knees.

Speaking of the reason why the first tether should connect the knee-side wall and vehicle body side wall by the connecting distance of 50 to 90 mm, the connecting distance less than 50 mm reduces a clearance between the knee-side wall and vehicle body side wall in the vicinity of the tether, that is, the thickness of the airbag in the vicinity of the tether, which, in the event that this region comes to receive the knees, may cause bottoming out of the knee-side wall to hit the vehicle body side wall, so that the protection of the knees is defective. Moreover, the airbag gets constricted at this region and thereby inhibiting supply of inflation gas to the knee-arresting portion or upper inflatable chamber. To the contrary, the connecting distance over 90 mm thickens the thickness of a region of the lower inflatable chamber right below the first tether and makes it difficult to secure the offset of 10 mm and above explained above. Further, the region right below the first tether and a bottom region of the upper inflatable chamber may apply undue pressure to the shins.

The upper inflatable chamber or knee-arresting portion has a relatively great outer diameter or thickness in the anteroposterior direction of 150 to 220 mm. However, because of the gas communication holes formed at the location of the tether that are configured such that the mainstreams of inflation gas heading to the upper inflatable chamber are located proximate both left and right ends of the airbag, the upper inflatable chamber inflates from the left and right regions to the center. More specifically, although the left and right regions of the upper inflatable chamber reach the position of the upper end of the airbag at full inflation in an early stage of airbag deployment, the upper inflatable chamber remains thin at this point and therefore is able to deploy in front of the occupant's knees easily, and thereafter increases the thickness from the left and right regions to the center and completes inflation. As a result, the upper inflatable chamber suitably receives the knees.

Therefore, the airbag of the invention conduces to reduce time and cost for manufacturing an airbag while maintaining proper knee-arresting properties and avoiding pressing shins because the airbag includes only one tether for partitioning the upper and lower inflatable chambers and is made of the base cloths that allows a little gas leakage (with a Frazier air permeability of 0.6 L/cm²/min and below) instead of coated fabric that allows no gas leakage.

According to one embodiment of the present invention fabrics with no coating are used, which will reduce the manufacturing cost of an airbag.

According to a further embodiment of the present invention the gas communication holes formed at the location of the first tether include a center hole located proximate a center of the airbag in a transverse direction in addition to each one end hole located proximate left and right ends of the airbag, on condition that each of the end holes has a greater opening area than the center hole such that the mainstreams of inflation gas heading to the upper inflatable chamber are located proximate both left and right ends of the airbag. Such configuration will help a transverse central region of the knee-arresting portion proximate the first tether to secure a certain degree of thickness in the early stage of airbag inflation. Hence the knee-arresting portion will be able-to receive knees in a cushioning manner by that region immediately above the first tether even in the event that the knees approach that region halfway through the airbag inflation.

In the above case, it is desired that the center holes are formed in plurality to line up along the transverse direction and that a distance between a leftmost center hole and a rightmost center hole is greater than a transverse width of the emergence opening of the case. Such configuration will help throw the first tether out of the case upon airbag inflation since inflation gas pushes peripheries of the center holes toward the upper inflatable chamber while passing through the center holes.

The airbag described above may include in the upper inflatable chamber a second tether that is connected to the joint of a front end of the first tether to the vehicle body side wall by a front end and connected to the knee-side wall of the upper inflatable chamber by a rear end so as to inhibit an area around the joint to the knee-side wall from protruding rearward. Specifically, the rear end of the second tether is connected to the vicinity of a vertically intermediate position between an upper end of the knee- side wall of the upper inflatable chamber and a joint of the first tether to the knee-side wall and at least in the vicinity of a center of the knee-side wall of the upper inflatable chamber in the transverse direction.

In operation, the upper inflatable chamber of such an airbag inflates into a generally columnar shape and gets compressed upon receiving entire front faces of knees to upper ends of shins of an occupant by an arresting area of the rear face for absorbing a kinetic energy of the occupant without pressing the shins.

At this time the second tether pulls a central region of the rear face of the upper inflatable chamber in a transverse direction, where the second tether is connected, forward and prevents that region from entering in between occupant's knees, so that the upper inflatable chamber acting as the knee-arresting portion securely receive head on the entire front faces of the knees and the upper ends of the shins by the arresting area without letting the knees slip off outwardly.

The second tether conduces to reduce the following potential risk that is relevant to the configuration where the upper inflatable chamber acting as the knee-arresting portion is formed into a thick columnar shape at inflation. Specifically, with such configuration, a portion of the knee-arresting portion not contacting knees is likely to intrude in between the knees at airbag inflation and push the knees away outwardly. Hence the knees will not contact head on the knee-arresting portion and the airbag will fail to absorb the kinetic energy of the occupant moving forward properly. However, the second tether of the invention pulls the central region of the rear face of the upper inflatable chamber in a transverse direction forward and prevents that region from entering in between the knees, thereby solving the above problem.

Moreover, although the second tether is connected to vertically and transversely central region of the rear face of the upper inflatable chamber by the rear end, the upper inflatable chamber is able to inflate in a thick manner from the joint of the first tether to the vehicle body side wall to the upper ends of the vehicle body side wall and knee-side wall and further from the upper end of the knee-side wall to the joint of the second tether to the knee-side wall in a vertical section taken anteroposteriorly since the front end of the second tether is connected to the vehicle body side wall at the same location as the front end of the first tether, thereby receiving knees and upper ends of shins with sufficient cushioning property.

Therefore, the airbag of the invention with the second tether securely receives knees of a vehicle occupant with sufficient cushioning property by the knee-arresting portion without pushing the knees away outwardly.

The second tether is desirably configured such that the rear face of the upper inflatable chamber is partially located forward by 5 to 40 mm at full inflation of the airbag relative to that in the hypothetical configuration where the airbag has no such second tether.

Explaining the reasons for that, if a forward travel distance of the arresting area by the second tether relative to that under the hypothetical situation that the airbag has no second tether is less than 5 mm, the second tether will be of no significance. On the contrary, if the travel distance surpasses 40 mm, a wide area around the joint of the rear end of the second tether to the knee-side wall of the upper inflatable chamber recesses forward in such a manner as to move a region of the arresting area for receiving front faces of knees forward and an area below the joint of the second tether bulges obliquely downward and rearward. Then a rear face of the bulge may apply pressure to shins rather than knees in cooperation with the rear face of the lower inflatable chamber, which will inhibit an advantage of the configuration of the airbag having a generally columnar knee-arresting portion in order to receive knees and upper ends of shins without pressing the shins.

When the airbag with the second tether is a cut-and-sewn airbag formed by sewing a plurality of base cloths together, manufacturing of the airbag will not be complicated despite the two tethers, if the front ends of the first tether and the second tether are sewn to the vehicle body side wall by a same, single seam.

Moreover, the number of parts of the airbag will be reduced by providing the second tether as part of, that is, as integral with a base cloth for forming the vehicle body side wall of the lower inflatable chamber.

Furthermore, if a width of the second tether in a transverse direction is smaller than an assumed distance between knees of the occupant, the second tether will not interrupt the mainstreams of inflation gas located on the left and right regions of the airbag, and therefore conducing to quick inflation of the upper inflatable chamber. However, the second tether may be configured to have a wider width in the transverse direction on condition that it does not interrupt the mainstreams of inflation gas passing through left and right regions of the airbag for the upper inflatable chamber.

### BRIEF DESCRIPTION OF DRAWINGS

Fig. 1 is a schematic vertical section of aknee-protecting airbag apparatus employing an airbag according to a first embodiment of the invention as mounted on a vehicle;
Fig. 2 is a schematic enlarged vertical section of the airbag apparatus of Fig. 1 as mounted on a vehicle;
Fig. 3 is a schematic horizontal section taken along line III-III of Fig. 2;
Fig. 4 is a front view of the airbag apparatus of Fig. 1 as mounted on a vehicle;
Fig. 5 is a front view of the airbag of the first embodiment ;
Fig. 6 is a sectional view of the airbag of Fig. 5 taken along line VI-VI of Fig. 5;
Fig. 7A is a vertical section of the airbag of Fig. 5 taken along line VII-VII of Fig. 5, especially showing a slightly inflated state;
Fig. 7B is a vertical section of the airbag of Fig. 5 fully inflated by itself, taken along line VII-VII of Fig. 5;
Fig. 8 illustrates the airbag of Fig. 5 in a fully inflated state on a vehicle not equipped by a column cover as a surrounding part of a vehicle;
Figs. 9A to 9C and 10A to 10D illustrate the folding process of the airbag of Fig. 5;
Figs. 11A and 11B are schematic vertical sections showing the inflation processes of the airbag of Fig. 5 in order;
Fig. 12 is a schematic vertical section of the airbag of Fig. 5 fully inflated on a vehicle;
Figs. 13A and 13B are schematic horizontal sections showing the inflation processes of the airbag of Fig. 5 in order;
Fig. 14 is a schematic vertical section of a knee-protecting airbag apparatus employing an airbag according to a second embodiment of the invention as mounted on a vehicle;
Fig. 15 is a front view of the airbag of the second embodiment;
Fig. 16 is a sectional view of the airbag of Fig. 15 taken along line XVI-XVI of Fig. 15;
Fig. 17A is a vertical section of the airbag of Fig. 15 slightly inflated, taken along line XVIIA- XVIIA of Fig. 15;
Fig. 17B is a vertical section of the airbag of Fig. 15 fully inflated by itself, taken along line XVIIB-XVIB of Fig. 15;
Fig. 17C is a vertical section of the airbag of Fig. 15 fully inflated by itself, taken along line XVIIC-XVIC of Fig. 15;
Fig. 18 illustrates main components of the airbag of Fig. 15 by front views;
Fig. 19 illustrates the airbag of Fig. 15 in a fully inflated state on a vehicle not equipped by a column cover as a surrounding part of a vehicle;
Fig. 20 shows schematic vertical sections illustrating the inflation processes of the airbag of Fig. 15 in order;
Fig. 21 is a schematic vertical section of the airbag of Fig. 15 fully inflated on a vehicle; and
Figs. 22A to 22C show schematic horizontal sections illustrating the inflation processes of the airbag of Fig. 15 in order.

### DESCRIPTION OF PREFERRED EMBODIMENTS

Preferred embodiments of the present invention are now described below with reference to the accompanying drawings. However, the invention is not limited to the embodiments disclosed herein. All modifications within the appended claims and equivalents relative thereto are intended to be encompassed in the scope of the claims.

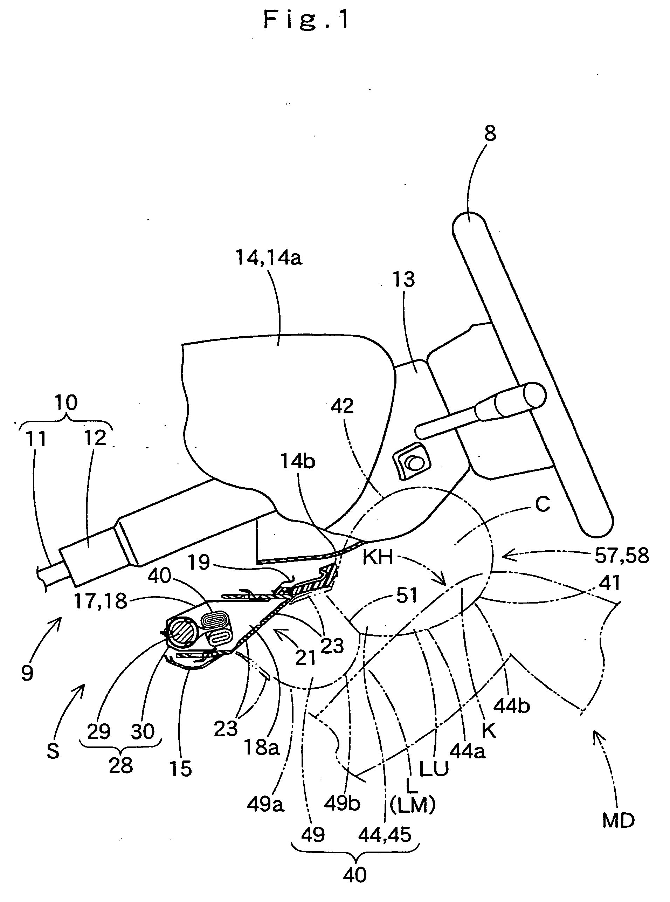

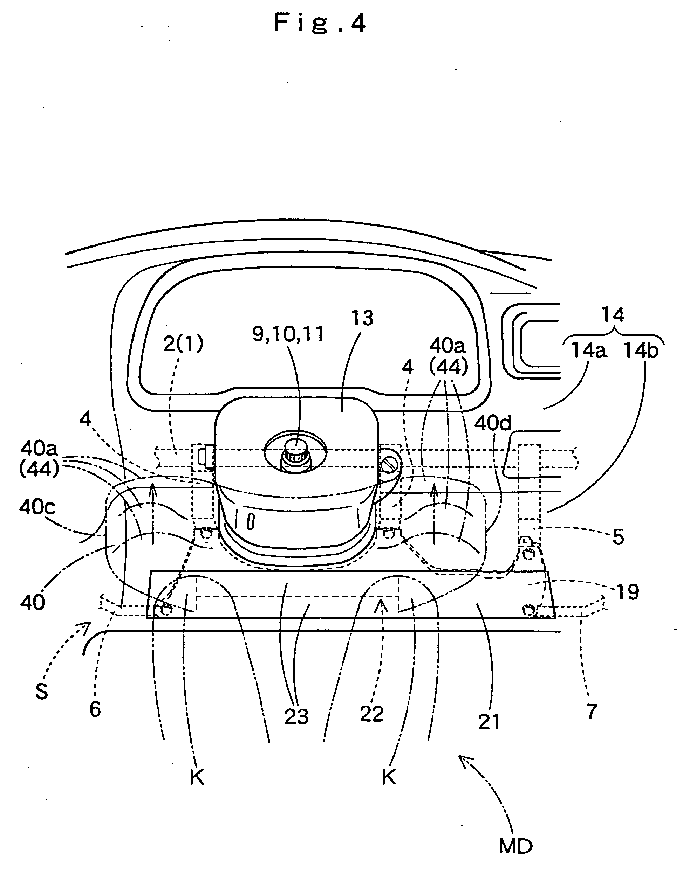

An airbag 40 according to a first embodiment of the invention is employed in a knee-protecting airbag apparatus S shown in Figs. 1 to 4. As shown in Figs. 1 and 4, the airbag apparatus S is located below a steering column 9 in front of a driver's seat for protecting knees K of a driver or occupant MD.

As shown in Fig. 1, the steering column 9 includes a column body 10 connected to a steering wheel 8 and a column cover 13 that covers the column body 10 below the steering wheel 8. The column body 10 includes a main shaft 11 and a column tube 12 mounted around the main shaft 11. The column cover 13 is made from synthetic resin and has a generally square tubular shape projecting rearward from an instrument panel or dashboard while covering the column body 10 (Fig. 4).

As shown in Figs. 1 to 3, the airbag apparatus S includes in addition to the airbag 40 an inflator 28 for supplying the airbag 40 with inflation gas G, a case 17 that houses the inflator 28 and airbag 40 in a folded state and has an opening 18a at the rear, an airbag cover 21 covering the back side of the opening 18a of the case 17.

Unless otherwise specified, up/down, front/rear, and left/right directions in this specification are intended to refer to up/down, front/rear, and left/right directions of a vehicle equipped with the airbag apparatus S.

The case 17 is made of sheet metal, and is disposed below the steering column 9 as shown in Figs. 1 to 3. The case 17 includes a box-shaped main body 18 and a panel portion 19 (Fig. 4) extending outwardly from the main body 18. The main body 18 has a generally bottomed square tubular contour and includes a generally rectangular opening 18a at the rear. The main body 18 is provided on outer surfaces of the top and bottom with a plurality of hooks 18b and 18c for connecting later-described joint walls 25 and 26 of the airbag cover 21 to the case 17. The hooks 18b and 18c are inserted into apertures 25a and 26a of the joint walls 25 and 26 of the airbag cover 21 and retain peripheries of the apertures 25a and 26a.

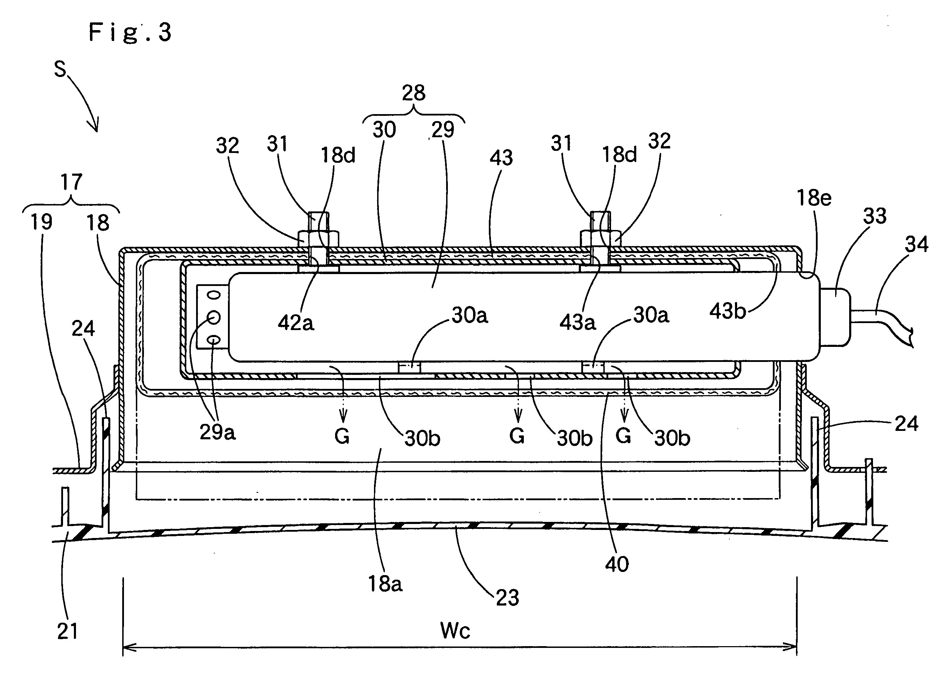

The main body 18 further includes two mounting holes 18d for receiving mounting bolts 31 of the inflator 28 on a bottom wall facing away from the opening 18a, and a through hole 18e (Fig. 3) for receiving an end portion of a later-described inflator body 29 provided with a connector 33 on a right side wall.

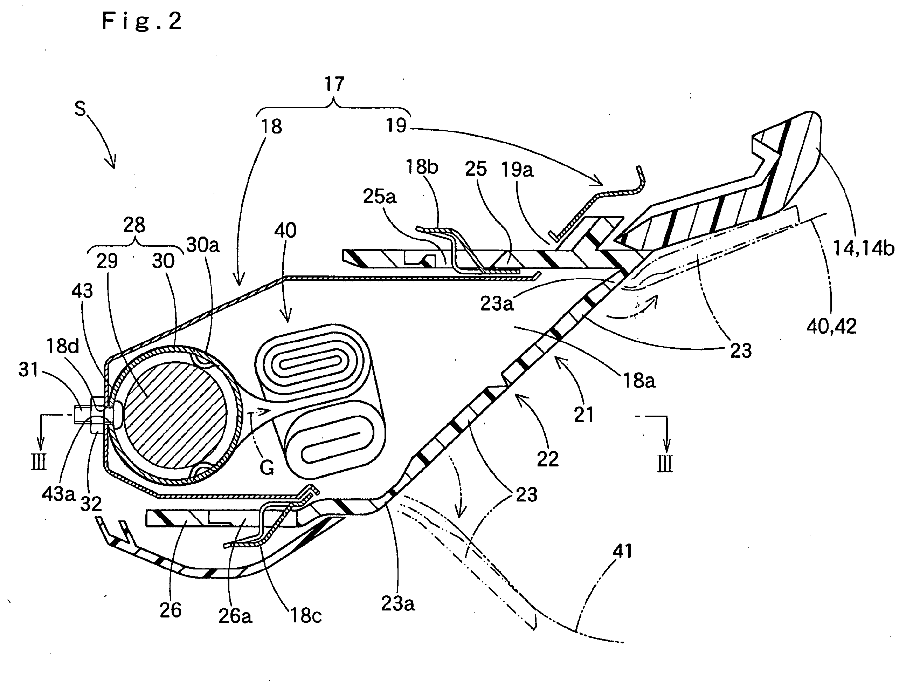

The panel portion 19 is arranged in such a manner as to encircle the opening 18a of the main body 18 and is connected at five positions on an outer peripheral region to brackets 4, 5, 6 and 7 extending from dashboard reinforcement 2 or the like of vehicle body structure 1 for securing the case 17 to the vehicle body structure 1 as shown in Fig. 4. The panel portion 19 is further provided above the main body 18 with a slot 19a for receiving a joint wall 25 of the airbag cover 21 as shown in Fig. 2.

The airbag cover 21 is fabricated of thermoplastic elastomer of olefin or the like. It covers the rear of the case 17 and is assembled with the case 17. The airbag cover 21 is disposed on a lower panel 14b of the dashboard 14 that is comprised of an upper panel 14a and lower panel 14b as shown in Figs. 2 and 4. The airbag cover 21 includes at the rear of the opening 18a of the case 17 two doors 23 openable respectively upward and downward about integral hinges 23a. The doors 23 are provided therearound with a thinned tearable portion 22 having a generally H-shape as viewed from the rear. Around the doors 23 are cover walls 24 and joint walls 25 and 26 arranged to surround the main body 18 of the case 17 and extending forward as shown in Figs. 2 and 3. The cover walls 24 are arranged to cover laterals of the main body 18 while the joint walls 25 and 26 cover top and bottom of the main body 18. Each of the joint walls 25 and 26 includes a plurality of apertures 25a and 26a for engagement with the hooks 18b and 18c of the main body 18 of the case 17 as described above.

The inflator 28 is columnar in shape and is so arranged that its axis extends along a transverse direction of vehicle as shown in Figs. 2 and 3. It includes a generally columnar body 29 and a generally cylindrical diffuser 30 mounted around the body 29. The body 29 is provided on a first end (or left end, in the illustrated embodiment) with a plurality of gas discharge ports 29a while being provided on a second end (or right end) with a connector 33 connected with a lead wire 34 for feeding an actuating signal. The diffuser 30 is made of sheet metal and includes a clamping portion 30a that holds the body 29 in a diametrically shrinking manner, a plurality of gas outlets 30b for releasing inflation gas G exited the gas discharge ports 29a of the body 29 rearward, and a plurality of (two, in the illustrated embodiment) mounting bolts 31 projecting forward from the clamping portion 30a.

The inflator 28 is operable simultaneously with an unillustrated airbag apparatus mounted on a steering wheel 8 in response to an actuating signal fed via the lead wire 34 when a circuit for activating airbag apparatuses detects a frontal collision of vehicle.

The airbag 40 is folded up as houses the inflator 28 thereinside such that the mounting bolts 31 of the diffuser 30 project from apertures 43a of the airbag 40. When the airbag 40 is stored in the main body 18 of the case 17, the mounting bolts 31 are put through the case 17 and fastened into nuts 32, thereby serving as means for mounting the airbag 40 on the case 17.

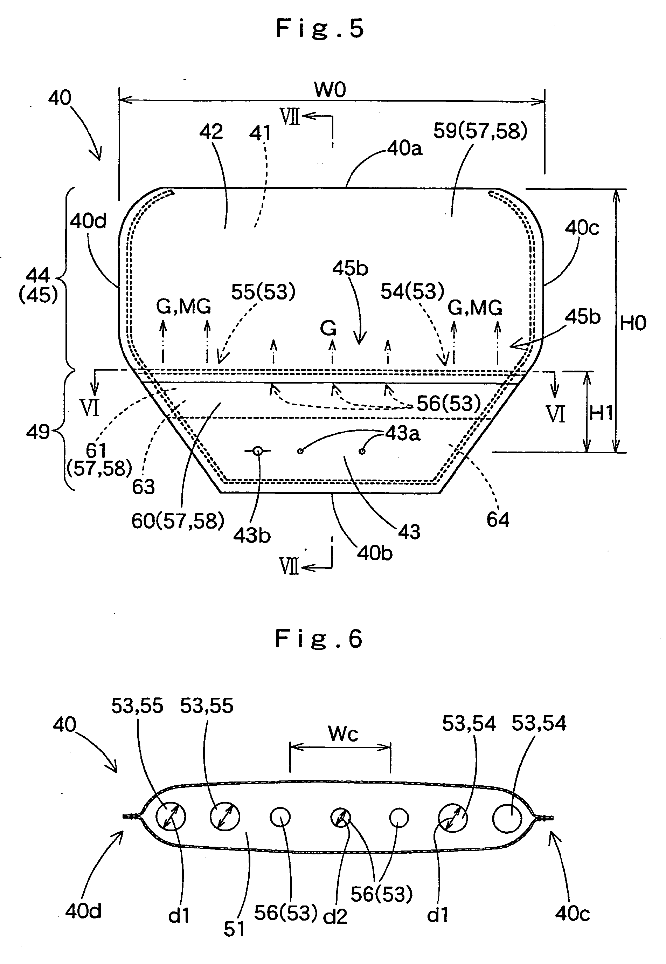

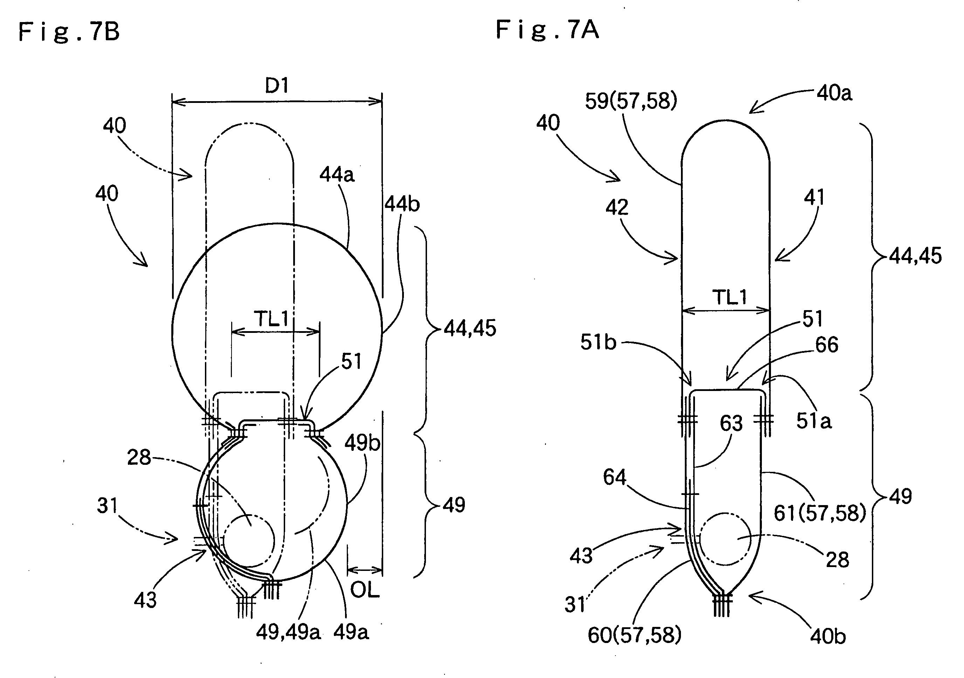

The airbag 40 is formed of flexible woven fabric of polyester, polyamide or the like. As shown in Figs. 5 and 7, the airbag 40 at full inflation is formed into such a contour as a home plate whose lower part has a reduced width. As indicated by double-dashed lines in Fig. 1, the airbag 40 includes a knee-side wall 41 deployable toward a driver MD and a vehicle body side wall 42 continuing from an outer edge of the knee-side wall 41 and deployable toward the column cover 13 in front of and facing the knee-side wall 41. The airbag 40 is a planar airbag wherein the knee-side wall 41 and vehicle body side wall 42 are identical in outer contour. As shown in Fig. 3, the airbag 40 includes on the vehicle body side wall 42 at a lower end region 40b apertures 43a for receiving the mounting bolts 31 of the inflator 28 and an aperture 43b for receiving the end region of the inflator body 29 having the connector 33. This region of the airbag with the apertures 43a and 43b serves as a mounting region 43 for attachment to the main body 18 of the case 17.

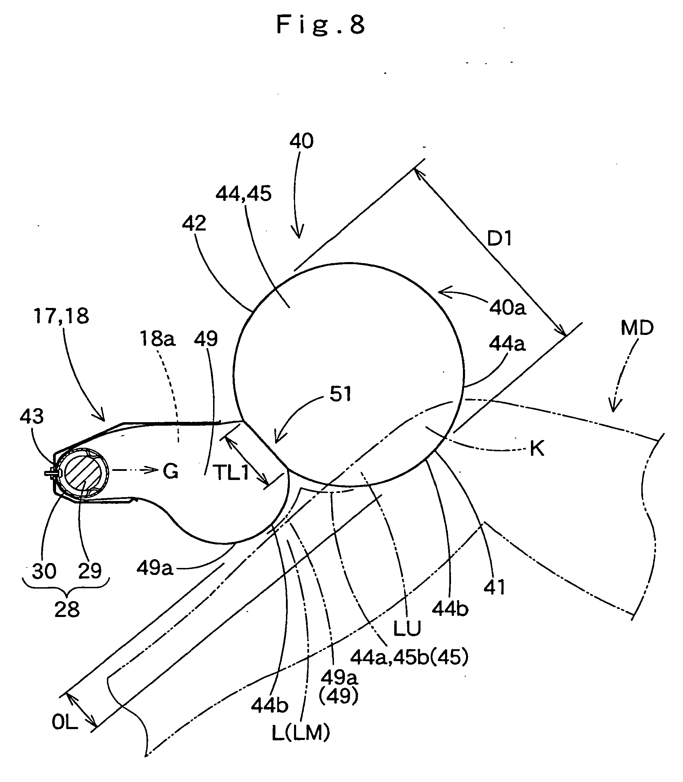

The airbag 40 includes proximate an upper end 40a at full inflation a knee-arresting portion 45 that has a greater thickness in an opposing direction of the walls 41 and 42 than other regions of the airbag 40 for receiving entire front faces of knees K and the vicinity of upper ends LU of shins L of a driver MD (Fig. 8). The airbag 40 further internally includes beneath the knee-arresting portion 45 a first tether 51 that connects the knee-side wall 41 and vehicle body side wall 42 and extends horizontally. The tether 51 partitions the airbag 40 into two, i.e. , into an upper inflatable chamber 44 serving as the knee-arresting portion 45 and a lower inflatable chamber 49 located beneath the knee-arresting portion 45.

As shown in Fig. 6, the airbag 40 includes at the location of the tether 51 a plurality of gas communication holes 53 for releasing inflation gas G to the upper inflatable chamber 44 from the lower chamber 49. The communication holes 53 are designed such that mainstreams MG of inflation gas G heading from the lower chamber 49 to the upper chamber 44 partitioned from the lower chamber 49 by the tether 51 are located proximate left and right ends of the airbag 40 so the upper chamber 44 inflates from left and right regions to the center. In the first embodiment, the tether 51 is connected or sewn to inner surfaces of the knee-side wall 41 and vehicle body side wall 42 by an entire outer circumference. In the illustrated embodiment, the gas communication holes 53 are comprised of holes formed on the tether 51 itself, specifically two round end holes 54 located proximate left or right ends of the tether 51 and two round end holes 55 located proximate opposite end of the tether 51, and three round center holes 56 located at the center of the tether 51 in a transverse direction.

More specifically, in the first embodiment, a total opening area of the set of the two end holes 54 and a total opening area of the set of the two end holes 55 are respectively designed greater than that of the set of the three center holes 56. An inner diameter d1 of each of the end holes 54 and 55 is 30 mm and an inner diameter d2 of each of the center holes 56 is 20 mm. A distance between leftmost and rightmost center holes 56 is designed slightly greater (set at 244 mm, in the first embodiment) than a width Wc of the opening 18a of the case 17 (set at 240 mm, in the first embodiment). This configuration helps throw the first tether 51 out of the case 17 upon airbag inflation since inflation gas G pushes peripheries of the center holes 56 toward the upper inflatable chamber 44 while passing through the center holes 56.

An outer wall of the airbag 40 is constructed of three base cloths 57; an upper panel 59, a lower front panel 60 and a lower rear panel 61. In addition, two reinforcing cloths 63, 64 and a tether material cloth 66 are used to form the airbag 40. The upper panel 59 is a single integral cloth having such a contour that areas of the knee-side wall 41 and vehicle body side wall 42 above the tether 51 are continuous at the upper edge 40a of the airbag 40. The lower front panel 60 constitutes an area of the vehicle body side wall 42 below the tether 51 while the lower rear panel 61 constitutes an area of the knee-side wall 41 below the tether 51. The airbag 40 is manufactured as follows : Firstly the upper panel 59 is doubled at the location of the upper edge 40a of the airbag 40 and sewn up at left and right edges. Then a front end 51a of the tether 51, an upper end of the lower front panel 60 preliminarily provided with the reinforcing cloth 64 and an upper end of the reinforcing cloth 63 are sewn to a bottom of the vehicle body side wall 42 of the upper panel 59 while a rear end 51b of the tether 51 and an upper end of the lower rear panel 61 are sewn to a bottom of the knee-side wall 41 of the upper panel 59 (Fig. 7A). Subsequently, following after the seams of the left and right edges of the upper panel 59, left and right edges of the lower panels 60 and 61 are sewn together up to a lower edge 40b of the airbag 40. Thus the airbag 40 is completed.

In the first embodiment, the airbag 40 is configured such that, when inflated by itself vertically, an outer diameter D1 of the upper inflatable chamber 44 acting as the knee-arresting portion 45 is 198 mm, which is within a range of 150 to 220 mm, while a connected distance TL1 between the knee-side wall 41 and vehicle body side wall 42 connected by the tether 51 is 60 mm, which is within a range of 50 to 90 mm.

Moreover, the airbag 40 is designed such that, when it is inflated vertically by itself as shown in Fig. 7B, a top 49b of a rear face 49a of the lower inflatable chamber 49 projecting rearward in a thickness direction of the airbag 40 is located forward relative to a projecting top 44b of a rear face 44a of the upper inflatable chamber 44 by an offset OL of 60 mm, which is within a range of 10 to 70 mm.

As shown in Fig. 5, in an uninflated and flattened state, a width WO of the airbag 40 in a transverse direction is 600 mm, a vertical length H0 of the airbag 40 between the apertures 43a to the upper end 40a is 405 mm and, a vertical length H1 from the apertures 43a to the tether 51 is 125 mm.

Further, the base cloths 57 of the airbag 40, i.e., the upper panel 59, the lower front panel 60 and the lower rear panel 61 including the two reinforcing cloths 63, 64 and the tether material cloth 66, are made of a woven fabric 58 having no coating. More specifically, an air permeability of the fabric 58 obtained by Frazier air permeability test is 0.5 L/cm²/min, which is not over 0.6 L/cm²/min.

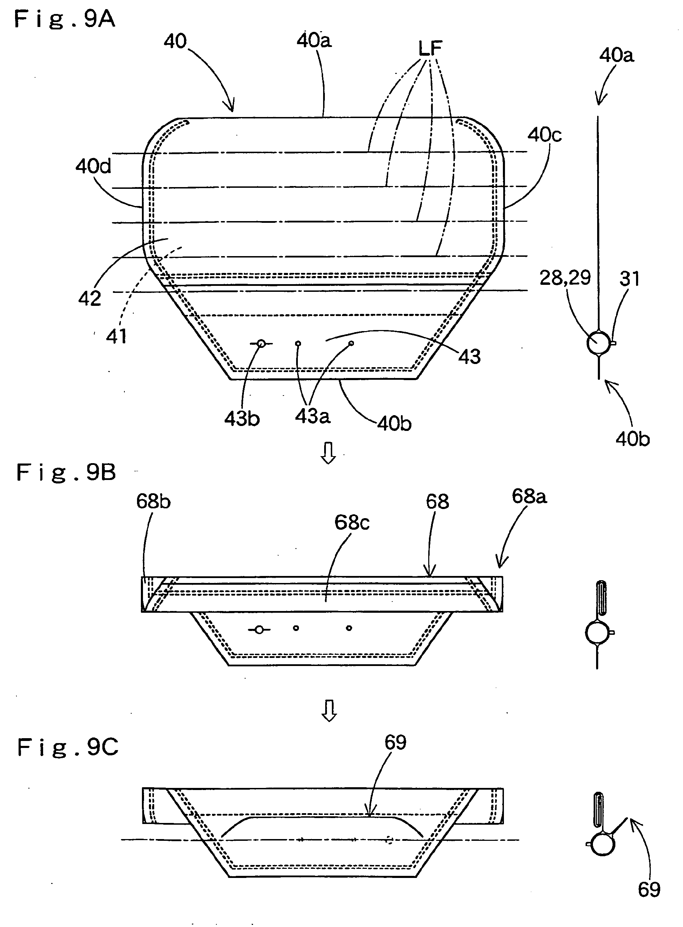

Folding-up process of the airbag 40 is now described. Firstly, as shown in Fig. 9A, the inflator 28 is housed inside the airbag 40 such that the mounting bolts 31 of the diffuser 30 project from the apertures 43a whereas the end portion of the inflator body 29 is exposed from the aperture 43b.

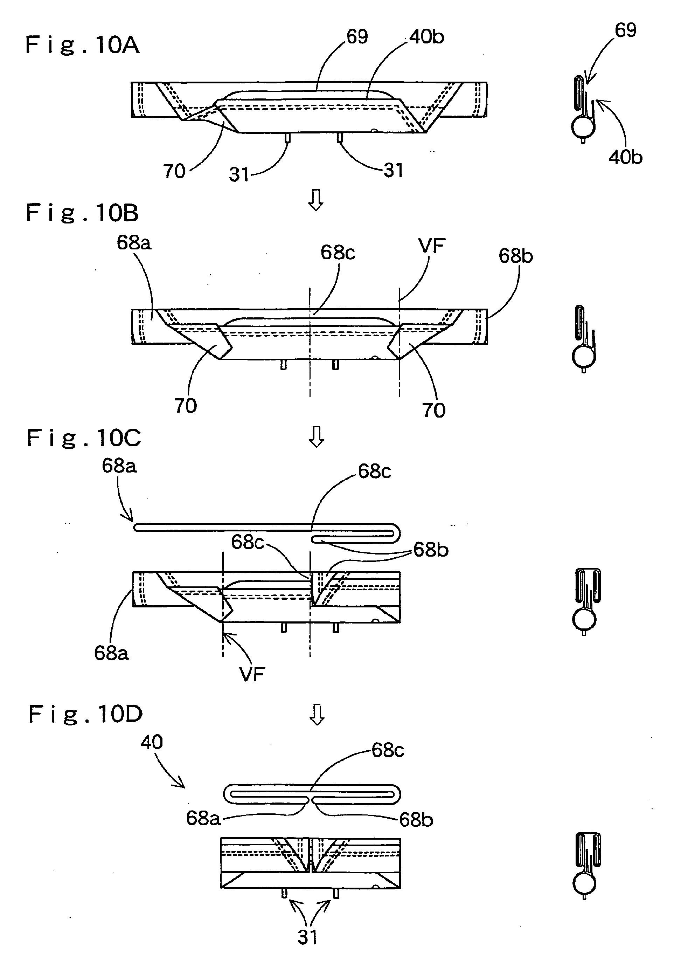

Subsequently, as shown in Figs. 9A and 9B, the flattened airbag 40 is subjected to horizontal folding that folds up the airbag 40 in such a manner as to make horizontal fold lines LF so the vertical dimension of the airbag 40 is reduced. In the first embodiment, an upper region of the airbag 40 is rolled from the upper end 40a on the vehicle body side wall 42 such that the upper end 40a is brought close to the lower end 40b, thereby forming a folded (or rolled) portion 68. Then as shown in Fig. 9C, a mountain fold 69, like a tuck, is formed such that a space is secured behind the inflator 28 when the airbag 40 is stored inside the main body 18 of the case 17. The mountain fold 69 and the lower edge 40b are placed below the inflator 28 as shown in Fig. 10A and then regions 70 of the airbag 40 positioned on the left and right of the inflator 28 are turned down as shown in Figs. 10A and 10B so as to facilitate housing of the inflator 28 and an airbag portion proximate thereof in the main body 18 of the case 17. The airbag 40 is then subjected to vertical folding that folds up the airbag 40 on such fold lines VF as to extend vertically so as to reduce the lateral width of the airbag 40 as shown in Figs. 10C and 10D. In the first embodiment, a left region and a right region of the rolled portion 68 are folded up such that a left edge 68a and a right edge 68b are brought close to each other below a center 68c of the rolled portion 68. Thus the folding of the airbag 40 is completed. Then the folded-up airbag 40 is wrapped by a suitable wrapping sheet (not-shown) for keeping the folded-up configuration.

Subsequently, the inflator 28 and folded-up airbag 40 are set in the main body 18 of the case 17 such that the mounting bolts 31 project from the mounting holes 18a and the end portion of the inflator body 29 for connection to the connector 33 projects from the through hole 18e. If the nuts 32 are fastened with the mounting bolts 31, the inflator 28 and the airbag 40 are secured to the main body 18 of the case 17 as shown in Fig. 3.

Then the airbag cover 21 is assembled with the case 17 by having the hooks 18b and 18c of the main body 18 of the case 17 engaged with the apertures 25a, 26a of the joint walls 25, 26 of the airbag cover 21 as shown in Fig. 2. Subsequently, the panel portion 19 of the case 17 is secured to the vehicle body structure 1 by the outer periphery utilizing the brackets 4, 5, 6 and 7, and then the connector 33 provided with the lead wire 34 is mounted on the inflator body 29. If then the dashboard 14 and an under cover 15 (Figs. 1 and 2) are assembled, the airbag apparatus S is mounted on the vehicle.

After the airbag apparatus S is mounted on the vehicle, if an actuating signal is fed to the inflator body 29 via the lead wire 34, inflation gas G is discharged from the gas discharge ports 29a of the inflator 28 and flows into the airbag 40 via the gas outlets 30b of the diffuser 30 as shown in Fig. 3. Then the airbag 40 inflates and breaks the wrapping sheet, pushes and opens the doors 23 of the airbag cover 21 upward and downward while breaking the tearable portion 22, so that the airbag 40 emerges from the opening 18a of the case 17 and deploys rearward for protecting knees K of the driver MD as indicated by double-dashed lines in Figs. 1 and 4.

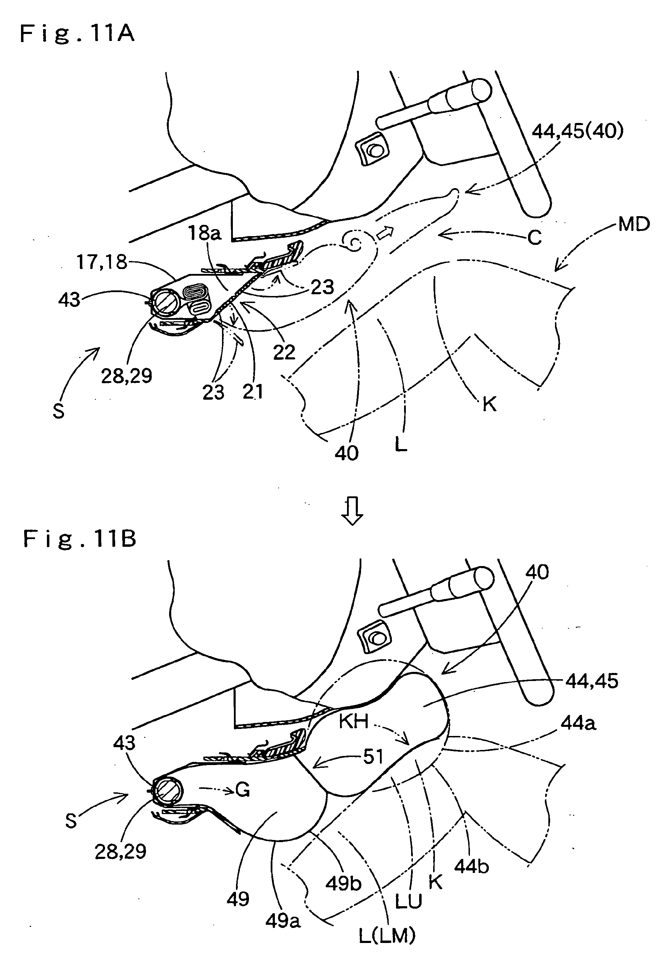

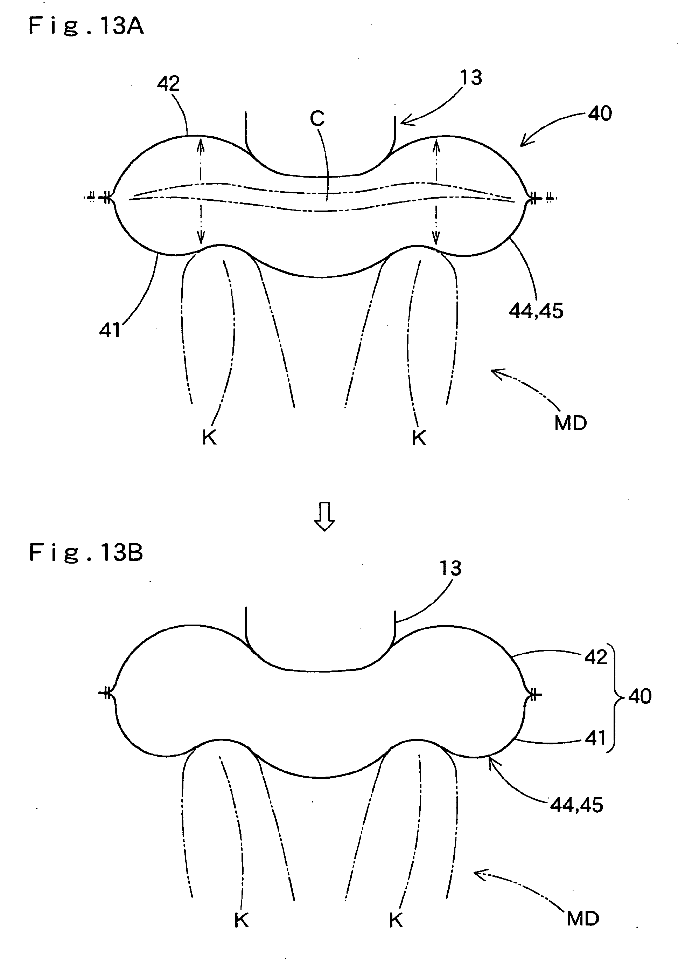

When the upper inflatable chamber 44 acting as the knee-arresting portion 45 receives the knees K by the rear face 44a upon airbag inflation, it gets compressed and absorbs the kinetic energy of the driver MD moving forward as shown in Figs. 8, 11B and 12. The knee-side wall 41 and vehicle body side wall 42 of the upper inflatable chamber 44 are made of the base cloths 57 having a Frazier air permeability of 0.5 L/cm²/min that is not over 0.6 L/cm²/min, and the upper inflatable chamber 44 when fully inflated has the outer diameter D1 or thickness in the anteroposterior direction of 198 mm. Securing the outer diameter of 150 mm and above, the upper inflatable chamber 44 would not bottom out, that is, the knee-side wall 41 would not bump into the vehicle body side wall 42, even in the event of gas leakage. Therefore, the upper inflatable chamber 44 will properly receive entire front faces of the vicinity of the upper ends LU of the shins L and the knees K. On the other hand, since the outer diameter D1 of the upper inflatable chamber 44 at full inflation does not surpass 220 mm, the inflatable chamber 44 is capable of entering into a gap C between the knees K and the column cover 13 (that is, part of vehicle) smoothly even if it is narrow as shown in Figs. 11A and 13A, and will not be likely to push back the knees K intensely at full inflation.

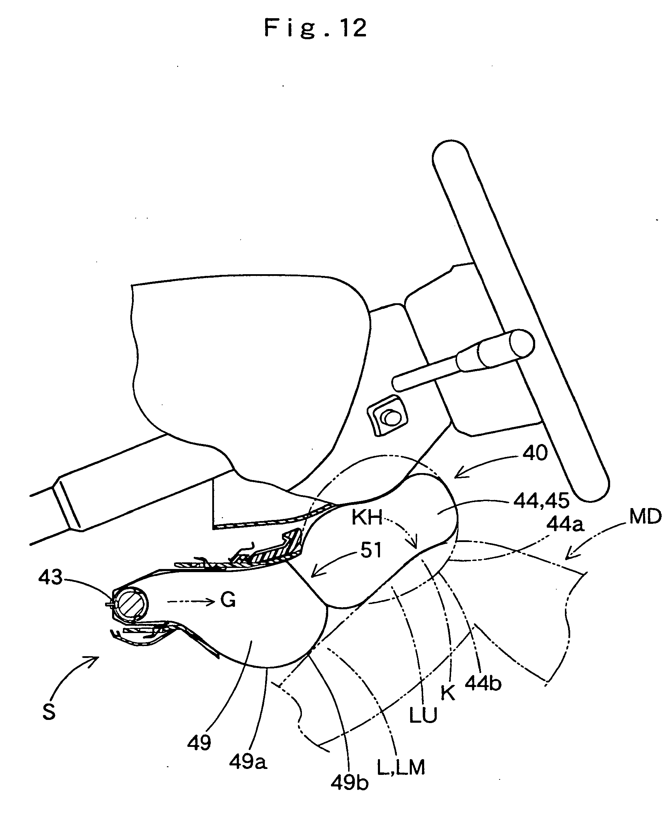

While the upper inflatable chamber 44 gets compressed by an impact of the knees K and absorbs the kinetic energy of the driver MD, the lower inflatable chamber 49 receives the shins L (more precisely, main regions LM of the shins L below the upper ends LU of the shins L) by its rear face 49a and gets compressed as shown in Fig. 12. At this time, since the lower inflatable chamber 49 is designed such that the projecting top 49b of the rear face 49a in a thickness direction of the airbag 40 is located off to the front relative to the projecting top 44b of the rear face 44a of the upper inflatable chamber 44 by the offset OL of 60 mm which is within a range of 10 to 70 mm, and since the shins L at the point of being thrown against the lower inflatable chamber 49 has a reduced kinetic energy due to prior restraint by the upper inflatable chamber 44, an advancing stroke of the shins L when received by the lower inflatable chamber 49 is not so great.

As a result, the airbag 40 securely receives and protects knees K of the driver or occupant MD avoiding pressure to shins L or main regions LM of the shins L as much as possible.

If the air permeability of the base cloths 57 of the airbag 40 surpasses 0.6 L/cm²/min, an abrupt plunge of an inner pressure of the airbag 40 can occur due to gas leakage especially when the upper inflatable chamber 44 has a small volume with an outer diameter or thickness in the anteroposterior direction of about 150 mm. In that case, in operation, the upper inflatable chamber 44 may not be able to reduce the kinetic energy of the driver MD effectively at receiving kneepan regions LH though it may not press the shins L too much. Therefore, the air permeability of the base cloths 57 of the airbag 40 is desirably 0.6 L/cm²/min and below.

With respect to the air permeability, a following comparative test was conducted using two comparative examples. The Frazier air permeability of base cloths 57 of Comparative example 1 is set at 0.7 L/cm²/min while that of Comparative example 2 is set at 1.07 L/cm²/min. The Comparative examples 1 and 2 are mounted on a vehicle in a similar manner to the airbag 40 described above and operated for receiving a dummy seated in a seat. According to the test result, the avoidances of pressure to shins L of Comparative Examples 1 and 2 are only slightly inferior to the first embodiment. With respect to the restraint performance, however, the test result shows inadequate inner pressures which have caused bottoming out and insufficient absorptions of kinetic energy by the upper inflatable portion 44, and therefore, restraint performances of knees K of the Comparative Examples turned out No Good.

With respect to the offset OL by which the projecting top 49b of the rear face 49a of the lower inflatable chamber 49 is located forward relative to the projecting top 44b of the rear face 44a of the upper inflatable portion 44, the offset OL less than 10 mm may cause damages to shins L by the lower inflatable chamber 49. To the contrary, if the offset OL surpasses 70 mm, the volume of the lower inflatable chamber 49 will be so small (refer to the rear face 49a of the lower inflatable chamber 49 indicated by double-dashed lines in Fig. 7B) that the tether 51 will fail to defect from the main body 18 of the case 17 at full inflation of the airbag 40. If the tether 51 fails to emerge out of the main body 18 of the case 17, the upper inflatable chamber 44 may not be able to deploy in front of knees K. Therefore, the offset OL is desirably within a range of 10 to 70 mm.

The connecting distance TL1 by which the tether 51 connects the knee-side wall 41 and vehicle body side wall 42 is configured to be 60 mm which is within a range of 50 to 90 mm. The connecting distance TL1 less than 50 mm will reduce a distance between the knee- side wall 41 and vehicle body side wall 42 in the vicinity of the tether 51, that is, the thickness of the airbag 40 in the vicinity of the tether 51. In that case, in the event that this region comes to receive knees K, the knee-side wall 41 may hit the column cover 13 via the vehicle body side wall 42, i.e., bottom out, so that the protection of knees K will be defective. Moreover, the airbag 40 will get constricted at this region and thereby inhibiting supply of inflation gas G to the knee-arresting portion 45. To the contrary, the connecting distance TL1 over 90 mm will thicken the thickness of the lower inflatable chamber 49 and make it difficult to secure the offset OL of 10 mm and above explained above. Further, referring to the rear faces 44a and 49a of the inflatable chambers 44 and 49 indicated by double-dashed lines in Fig. 8, this region in the vicinity of the tether 51 and a bottom region 45b of the knee-arresting portion 45 or upper inflatable chamber 44 may apply undue pressure to shins L. Therefore, the connecting distance TL1 of the tether 51 connecting the knee-side wall 41 and vehicle body side wall 42 is desirably within a range of 50 to 90 mm.

The upper inflatable chamber 44 or knee-arresting portion 45 has a relatively great outer diameter D1 or thickness in the anteroposterior direction of 150 to 220 mm. However, because of the gas communication holes 53 formed at the location of the tether 51 that are configured such that the mainstreams MG of inflation gas G heading to the upper inflatable chamber 44 are located proximate both left and right ends of the airbag 40 (Fig. 5), the upper inflatable chamber 44 inflates from left and right regions to the center. More specifically, as indicated by double-dashed lines in Fig. 4, although the left and right regions of the upper inflatable chamber 44 reach the position of the upper end 40a of the airbag 40 at full inflation in an early stage of airbag deployment, the chamber 44 remains thin as shown in Fig. 11A and therefore is able to deploy in front of knees K of the driver MD easily, and thereafter increases thickness from the left and right regions to the center and completes inflation. As a result, the upper inflatable chamber 44 suitably receives the knees K.

Therefore, the configuration of the airbag 40 of the first embodiment that includes only one tether 51 partitioning the upper and lower inflatable chambers 44 and 49 and is made of the base cloths 57 that allows a little gas leakage (with a Frazier air permeability of 0.6 L/cm²/min and below) instead of coated fabric that allows no gas leakage conduces to reduce time and cost for manufacturing an airbag while maintaining proper knee-arresting properties and avoiding pressing shins L.

The knee-side wall 41 and vehicle body side wall 42 may be made of base cloths having a coating of silicone rubber or the like for preventing gas leakage. Such coated base cloths will have a Frazier air permeability of 0 L/cm²/min. However, using the fabric 58 having no coating described above will reduce the manufacturing cost of an airbag.

Furthermore, the gas communication holes 53 formed at the location of the tether 51 includes the center holes 56 located proximate the transverse center of the airbag 40 in addition to the end holes 54 and 55 located proximate left and right ends 40c and 40d of the airbag 40. Each set of the end holes 54 and 55 for locating the mainstreams MG of inflation gas G entering into the knee-arresting portion 45 on the left and right regions of the airbag 40 has a greater opening area than the set of the center holes 56. This configuration will help a transverse central region of the knee-arresting portion 45 proximate the tether 51 to secure a certain degree of thickness in the early stage of airbag inflation. Hence the knee-arresting portion 45 is able to receive knees K in a cushioning manner by its lower region 45b immediately above the tether 51, which has inflated from left and right region to the center, even in the event that the knees K approach the region 45b halfway through the airbag inflation.

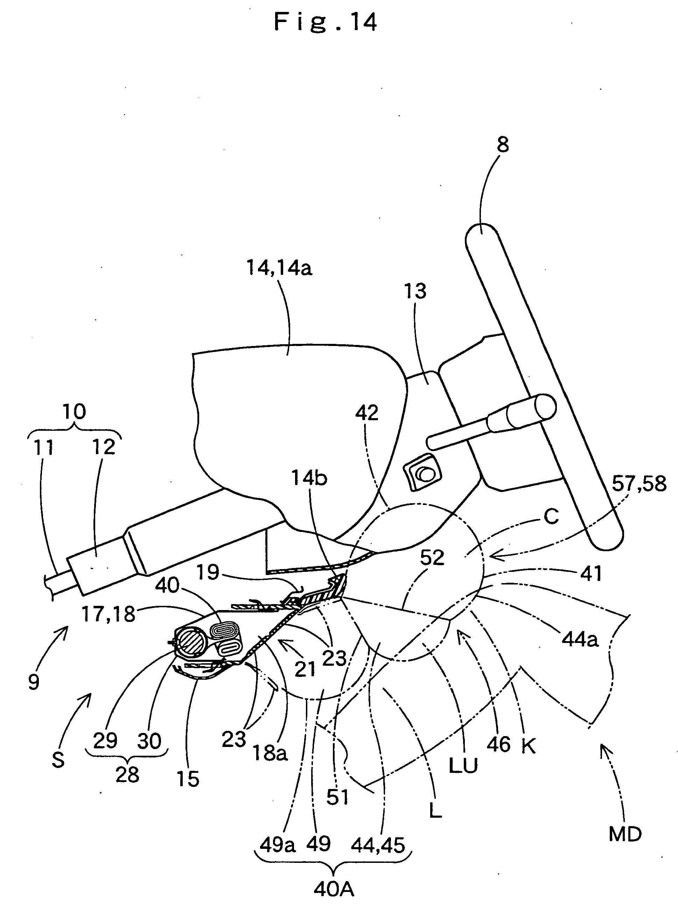

The second embodiment of the invention is now described. As shown in Fig. 14, an airbag 40A according to the second embodiment is mountable on the knee-protecting airbag apparatus S as well as the airbag 40 in the first embodiment. As described above, the airbag apparatus S includes in addition to the airbag 40A an inflator 28 for supplying the airbag 40A with inflation gas G, a case 17 that houses the inflator 28 and airbag 40A in a folded state and has an opening 18a at the rear, an airbag cover 21 covering the back side of the opening 18a of the case 17.

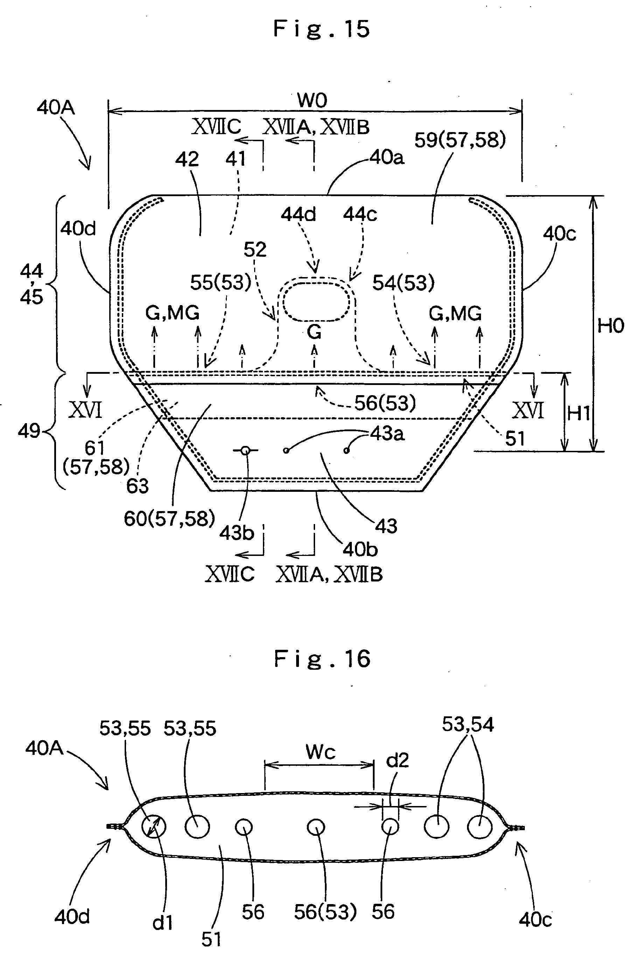

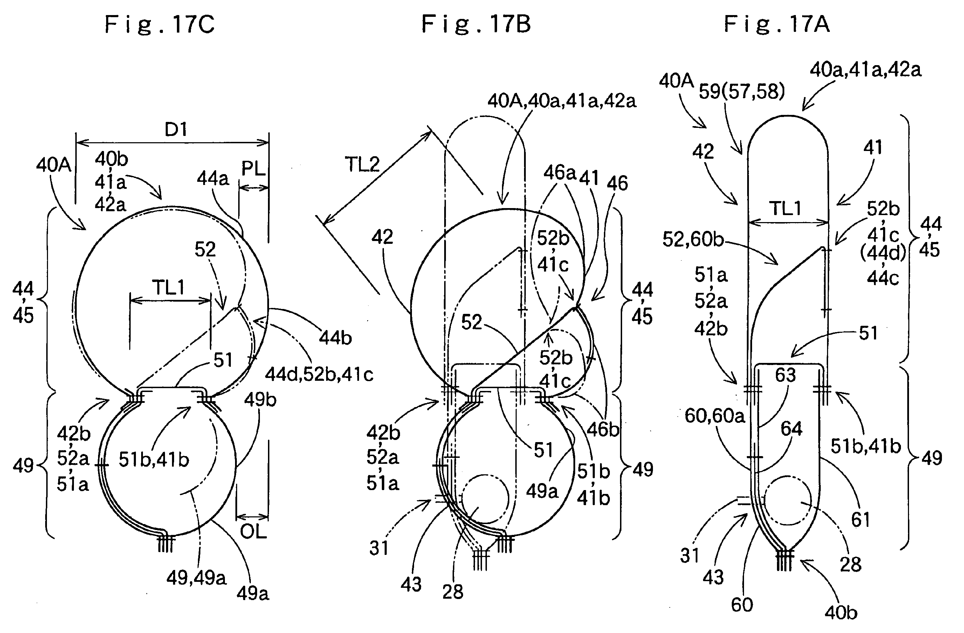

The only difference of the second embodiment from the first is that the airbag 40A includes a second tether 52. That is, as shown in Figs. 15 and 17A to 17C, the airbag 40A is formed of flexible woven fabric of polyester, polyamide or the like as in the first embodiment, and is formed into a contour like a home plate whose lower part has a reduced width at full inflation. As indicated by double-dashed lines in Fig. 14, the airbag 40A includes a knee-side wall 41 deployable toward a driver MD and a vehicle body side wall 42 continuing from an outer edge of the knee-side wall 41 and deployable toward the column cover 13 in front of and facing the knee-side wall 41. The airbag 40A is also a planar airbag wherein the knee-side wall 41 and vehicle body side wall 42 are identical in outer contour. The airbag 40A includes on the vehicle body side wall 42 at a lower end region 40b apertures 43a for receiving mounting bolts 31 (Fig. 17A) of the inflator 28 and an aperture 43b for receiving an end region of the inflator body 29 provided with an unillustrated connector. In the airbag 40A as well, this region provided with the apertures 43a and 43b serves as a mounting region 43 for attachment to the main body 18 of the case 17.

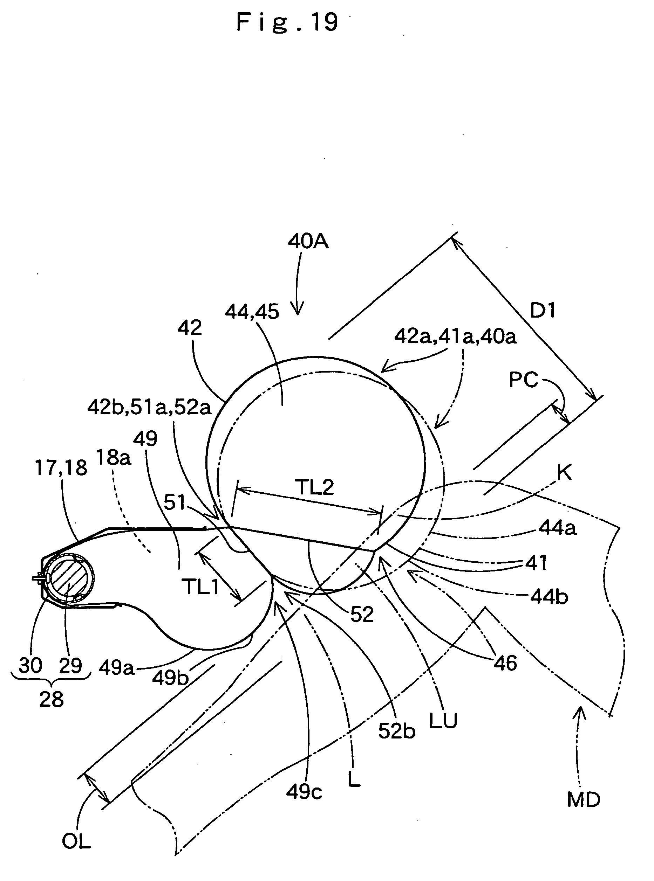

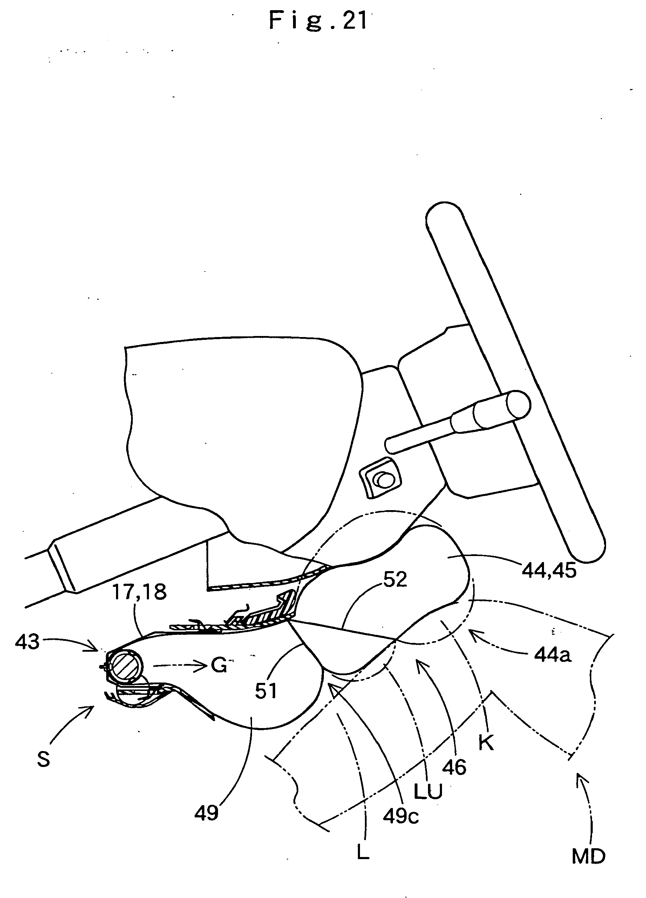

The airbag 40A includes proximate an upper end 40a at full inflation a knee-arresting portion 45 that has a greater thickness in an opposing direction of the walls 41 and 42 than other regions of the airbag 40A for receiving knees K as shown in Figs. 19, 21, 22A to 22C. The knee-arresting portion 45 of the second embodiment includes on a rear face 44a an arresting area 46 that extends widely in four directions for receiving entire front faces of the vicinity of upper ends LU of shins L and knees K of a driver MD. The airbag 40A further internally includes a first tether 51 and a second tether 52 that connects the knee-side wall 41 and vehicle body side wall 42 for controlling a thickness of the airbag 40A in an opposing direction of the walls 41 and 42 at airbag inflation. The first tether 51 acts to partition the airbag 40 into a plurality of chambers arranged one above another whereas the second tether 52 makes a part of the arresting area 46 dent forward so as to inhibit rearward protrusion of the part.

More specifically, as in the first embodiment, the first tether 51 is located on an upper region of the airbag 40A and partitions the airbag 40A into two, i.e., into an upper inflatable chamber 44 serving as the knee-arresting portion 45 and a lower inflatable chamber 49 located beneath the upper inflatable chamber 44.

As shown in Fig. 16, the airbag 40A includes at the location of the first tether 51 a plurality of gas communication holes 53 for releasing inflation gas G to the upper inflatable chamber 44 from the lower chamber 49. The communication holes 53 are designed such that mainstreams MG of inflation gas G heading to the upper chamber 44 from the lower chamber 49 are located proximate left and right ends so the upper chamber 44 inflates from left and right regions to the center. In the second embodiment, too, the first tether 51 is connected or sewn to inner surfaces of the knee-side wall 41 and vehicle body side wall 42 by an entire outer circumference. The gas communication holes 53 are comprised of two sets of two round end holes 54 and 55 located respectively proximate left and right ends of the tether 51 and a set of three round center holes 56 located at the center of the tether 51 in a transverse direction.

Furthermore, as in the first embodiment, a total opening area of the set of the two end holes 54 and a total opening area of the set of the two end holes 55 are respectively designed greater than that of the set of three center holes 56. An inner diameter d1 of each of the end holes 54 and 55 is 30 mm and an inner diameter d2 of each of the center holes 56 is 20 mm. A distance between leftmost and rightmost center holes 56 is designed greater (set at 300 mm, in the second embodiment) than a width Wc of the opening 18a of the case 17 (set at 240 mm, in the second embodiment).

Similarly to the first embodiment, as shown in Fig. 17C, when inflated by itself vertically, an outer diameter D1 of the upper inflatable chamber 44 acting as the knee-arresting portion 45 is 198 mm, which is within a range of 150 to 220 mm, whereas the first tether 51 connects the knee-side wall 41 and vehicle body side wall 42 by a connecting distance TL1 of 60 mm, which is within a range of 50 to 90 mm.

Moreover, the lower inflatable chamber 49 is designed such that, when it is inflated vertically by itself as shown in Fig. 17C, a top 49b of a rear face 49a projecting rearward in a thickness direction of the airbag 40 is located forward relative to a projecting top 44b of a rear face 44a of the upper inflatable chamber 44 by an offset OL of 60 mm, which is within a range of 10 to 70 mm.

As shown in Fig. 15, in a flattened state, a width WO of the airbag 40A in a transverse direction is 600 mm, a vertical length H0 of the airbag 40A between the apertures 43a to the upper end 40a is 405 mm and, a vertical length H1 from the apertures 43a to the first tether 51 is 125 mm. When the knee-side wall 41 and vehicle body side wall 42 are overlapped with outer edges aligned, a joint 42b that joins a front end 51a of the tether 51 to the vehicle body side wall 42 and a joint 41b that joins a rear end 51b of the tether 51 to the knee-side wall 41 are formed on the same level as shown in Fig. 17A.

Referring to Figs. 17A to 17C, the second tether 52 is connected to the joint 42b that joins the front end 51a of the first tether 51 to the vehicle body side wall 42 and to the knee-side wall 41 of the upper inflatable chamber 44. More specifically, a rear end 52b of the second tether 52 is connected to the vicinity of a vertically intermediate position between an upper end 41a of the knee-side wall 41 of the upper inflatable chamber 44 and the joint 41b of the rear end 51b of the first tether 51 to the knee-side wall 41 (i.e. , to a vertical center 44c of the rear face 44a of the upper inflatable chamber 44) and at least in the vicinity of a center 44d of the upper inflatable chamber 44 in a transverse direction such that the rear face 44a of the upper inflatable chamber 44 is located or recesses forward relative to a hypothetical top 44b of the rear face 44a in a hypothetical situation where the airbag 40 has no second tether 52, that is, such that a joint 41c of the second tether 52 to the rear face 44a of the upper inflatable chamber 44 is inhibited from protruding rearward.

In the second embodiment, a connecting distance TL2 (Fig. 17B) between the joint 42b that joins a front end 52a of the second tether 52 to the vehicle body side wall 42 and the joint 41c that joins the rear end 52b of the second tether 52 to the knee-side wall 41 is set at 130 mm such that the rear face 44a of the upper inflatable chamber 44 is partially dislocated forward relative to the rear face 44a in the hypothetical configuration where the airbag 40A has no second tether 52 by an offset PL (Fig. 17C) of 20 mm, which is within a range of 5 to 40 mm.

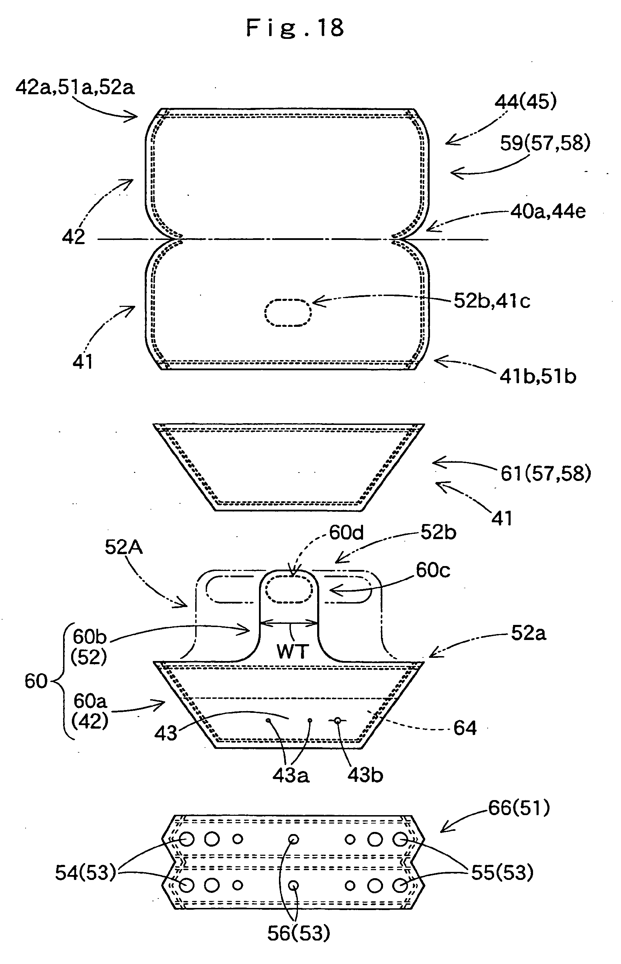

As shown in Fig. 18, an outer wall of the airbag 40A of the second embodiment is also constructed of three base cloths 57; an upper panel 59, a lower front panel 60 and a lower rear panel 61. In addition, two reinforcing cloths 63, 64 and a tether material cloth 66 to make the first tether 51 are used to form the airbag 40A. The second tether 52 is integral with the lower front panel 60. Specifically, the lower front panel 60 includes a main body 60a to form the vehicle body side wall 42 of the lower inflatable chamber 49 including the mounting region 43 and a tether portion 60b extending from an upper end of the main body 60a to form the second tether 52. A distal end or rear end 60c of the tether portion 60b to make the rear end 52b of the second tether 52 is provided with a region 60d to be sewn to the knee-side wall 41. The upper panel 59 is a single integral cloth having such a contour that areas of the knee-side wall 41 and vehicle body side wall 42 above the tether 51 are continuous at the upper edge 40a of the airbag 40A (Fig. 17A). The main body 60a of the lower front panel 60 constitutes an area of the vehicle body side wall 42 below the tether 51 whereas the lower rear panel 61 constitutes an area of the knee-side wall 41 below the tether 51. The airbag 40A is manufactured as follows: Firstly the rear end 52b of the second tether 52 is sewn to the knee-side wall 41 of the upper panel 59. The upper panel 59 is doubled at the location of the upper edge 40a of the airbag 40A and sewn up at left and right edges. Then the front end 51a of the first tether 51, an upper end of the main body 60a of the lower front panel 60 preliminarily provided with the reinforcing cloth 64, which includes the front end 52a of the second tether 52, and an upper end of the reinforcing cloth 63 are sewn to a bottom of the vehicle body side wall 42 of the upper panel 59 by a single seam whereas a rear end 51b of the first tether 51 and an upper end of the lower rear panel 61 are sewn to a bottom of the knee-side wall 41 of the upper panel 59. Subsequently, following after the seams of the left and right edges of the upper panel 59, left and right edges of the lower front panel 60 (main body 60a) and lower rear panel 61 are sewn together up to the lower edge 40b of the airbag 40A. Thus the airbag 40A is completed.

Similarly to the first embodiment, the base cloths 57 of the airbag 40A, i.e., the upper panel 59, the lower front panel 60 and the lower rear panel 61 including the two reinforcing cloths 63, 64 and the tether material cloth 66, are made of a woven fabric 58 having no coating. More specifically, a Frazier air permeability of the fabric 58 is 0.5 L/cm²/min, which is not over 0.6 L/cm²/min.

The airbag 40A thus manufactured is folded up in a similar fashion to the first embodiment and then mounted on a vehicle.

In the second embodiment, too, if an actuating signal is fed to an inflator body 29 via a lead wire 34 after the airbag apparatus S is mounted on the vehicle, inflation gas G is discharged from unillustrated gas discharge ports of the inflator 28 and flows into the airbag 40A via unillustrated gas outlets 30b of a diffuser 30. Then the airbag 40A inflates and breaks an unillustrated wrapping sheet, pushes and opens doors 23 of the airbag cover 21 upward and downward while breaking an unillustrated tearable portion, so that the airbag 40A emerges from the opening 18a of the case 17 and deploys rearward for protecting knees K of a driver MD as indicated by double-dashed lines in Fig. 14.

Subsequently as shown in Figs. 19, 21, 22A to 22C, the upper inflatable chamber 44 inflates into a generally columnar shape and gets compressed upon receiving entire front faces of knees K to upper ends LU of shins L of the driver MD by the arresting area 46 of the rear face 44a for absorbing a forward kinetic energy of the driver MD without pressing the shins L.

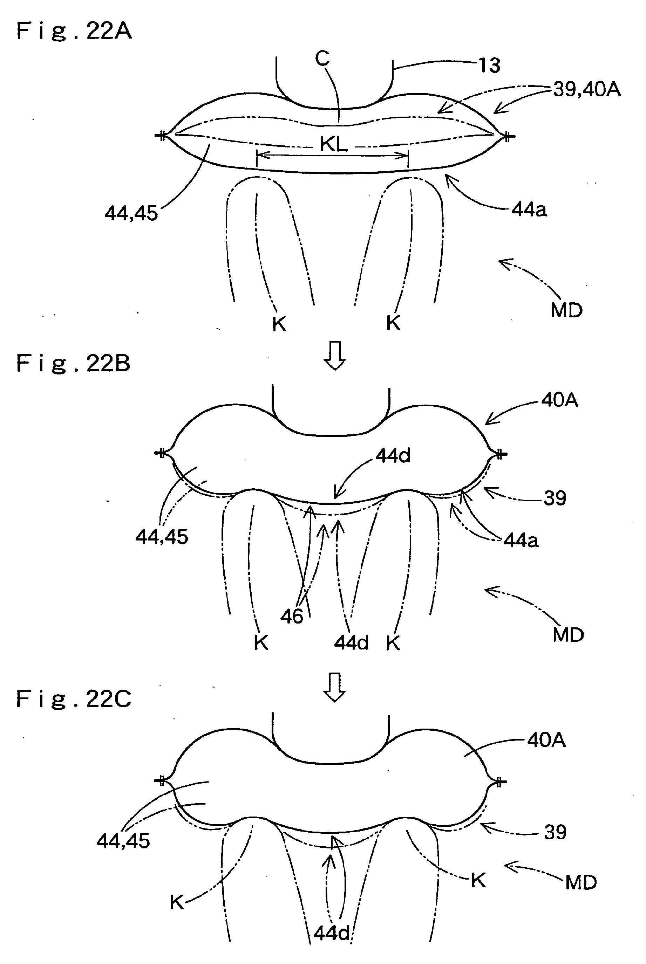

As shown in Figs. 15 and 17A, the second tether 52 is connected by the rear end 52b to a location on the knee-side wall 41 of the upper inflatable chamber 44 in the vicinity of a vertically intermediate position between the upper end 41a and the joint 41b of the rear end 51b of the first tether 51 to the knee- side wall 41 (i.e., in the vicinity of the vertical center 44c) and at least in the vicinity of the center 44d in a transverse direction such that the transverse center 44d of the rear face 44a of the upper inflatable chamber 44 is located or recesses forward relative to the hypothetical top 44b of the rear face 44a in the hypothetical situation where the airbag 40A has no second tether 52. That is, the second tether 52 pulls the transverse center 44d region of the rear face 44a of the upper inflatable chamber 44 forward and prevents the this region 44d from entering in between the knees K, so that the upper inflatable chamber 44 or knee-arresting portion 45 securely receives head on the entire front faces of knees K and upper ends LU of the shins L by the arresting area 46 without letting the knees K slip off outwardly (Figs. 22A to 22C).

Although the second tether 52 is connected to vertically and transversely central region 44c or 44d of the rear face 44a of the upper inflatable chamber 44 by the rear end 52b, the upper inflatable chamber 44 is able to inflate in a thick manner from the joint 42b of the first tether 51 to the vehicle body side wall 42 to the upper ends 42a and 41a of the walls 42 and 41 and further from the upper end 41a of the knee-side wall 41 to the joint 41c of the second tether 52 to the knee-side wall 41 in a vertical section taken anteroposteriorly as shown in Figs. 17B, 17C and 19 since the front end 52a of the second tether 52 is connected to the vehicle body side wall 42 at the same location as the front end 51a of the first tether 51, thereby receiving the knees K and upper end LU of the shins L with sufficient cushioning property. Figs. 22A to 22C illustrate behaviors of the airbag 40A in service by solid lines whereas illustrate behaviors of a comparative airbag 39 that has a similar structure to the airbag 40A but has no second tether 52 by double-dashed lines. Fig. 22B shows that the comparative airbag 39 intrudes in between knees K of an occupant MD deeply and pushes the knees K away outwardly.

Therefore, the airbag 40A according to the second embodiment of the invention securely receives knees K of a vehicle occupant with sufficient cushioning property by the knee-arresting portion 45 without pushing the knees K away outwardly.

Although the airbag 40A of the second embodiment is a cut-and-sewn airbag that is formed by sewing the base cloths 57 together, the front ends 51a and 52a of the first and second tethers 51 and 52 are sewn to the vehicle body side wall 42 (or to the upper panel 59 and the main body 60a of the lower front panel 60) by a same, single seam. This configuration facilitates the sewing work of the airbag 40A as much as possible though the airbag 40A includes two tethers 51 and 52.

Moreover, in the airbag 40A, the lower front panel 60 of the base cloths 57 for forming the vehicle body side wall 42 of the lower inflatable chamber 49 includes the main portion 60a for forming the wall 42 and the tether portion 60b for forming the second tether 52. That is, the second tether 52 is integral with the lower front panel 60. This configuration conduces to reduction of number of parts of the airbag 40A.

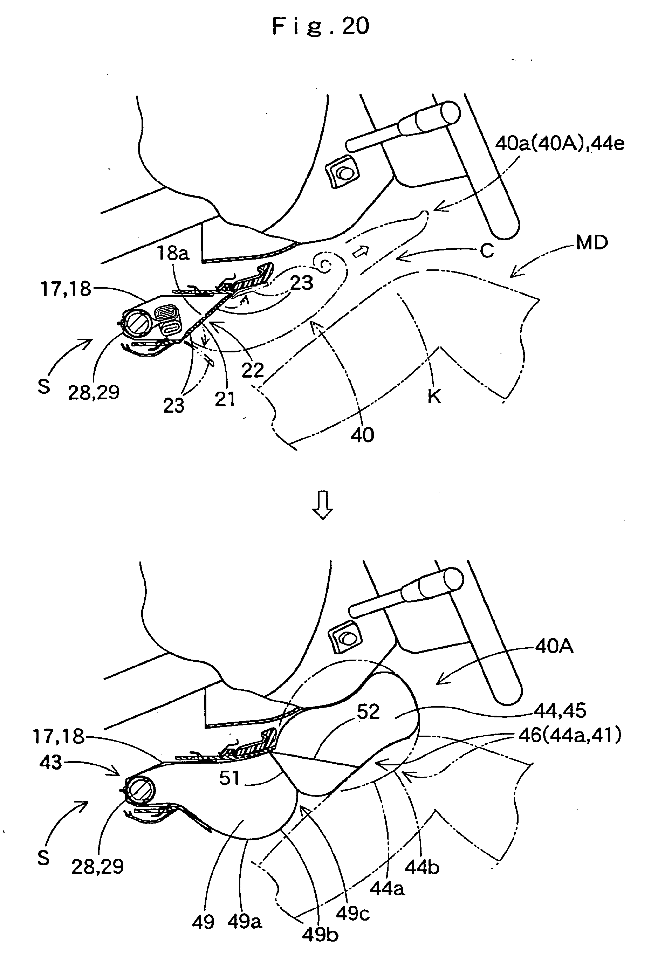

The upper inflatable chamber 44 of the second embodiment inflates into a generally columnar contour to have a relatively great thickness in the anteroposterior direction. However, because of the gas communication holes 53 formed at the location of the first tether 51 that are configured such that the mainstreams MG of inflation gas G heading to the upper inflatable chamber 44 are located proximate both left and right ends of the airbag 40A (Fig. 15), the upper inflatable chamber 44 inflates from left and right regions to the center. More specifically, as indicated by double-dashed lines in Fig. 20, although the left and right regions of the upper inflatable chamber 44 reach the position of the upper end 40a of the airbag 40A at full inflation in an early stage of airbag deployment, the chamber 44 remains thin at this point and therefore is able to deploy in front of knees K of the driver MD easily, and thereafter increases thickness from the left and right regions to the center and completes inflation. As a result, the upper inflatable chamber 44 suitably receives front faces of the upper ends LU of the shins L and the knees K.

The second tether 52 of the second embodiment is illustrated in Fig. 18 as has a width WT of 120 mm that is narrower than a distance KL (Fig. 22A) between knees K of an occupant which is normally about 400 mm. However, the second tether may be configured to extend farther leftward and rightward as a second tether 52A indicated by double-dashed lines in Fig. 18 on condition that it does not interrupt the mainstreams MG of inflation gas G passing through left and right regions of the airbag for the upper inflatable chamber 44. Since the width WT of the second tether 52 of the second embodiment in a transverse direction is smaller than an assumed distance between knees K of an occupant, it does not interrupt the mainstreams MG of inflation gas G located on the left and right regions of the airbag, and therefore conducing to quick inflation of the upper inflatable chamber 44.

In the second embodiment, too, the lower inflatable chamber 49 includes on the vehicle body side wall 42 the mounting portion 43 by which the airbag 40A is secured to the main body 18 of the case 17 and is configured to support the upper inflatable chamber 44 from below to help the top region 49c where the first tether 51 is located to defect rearward from the main body 18 of the case 17 at full inflation of the airbag 40A as shown in Figs. 19, 21 and 22A to 22C. That is, as the joint 42b of the front ends 51a and 52a of the first and second tethers 51 and 52 to the vehicle body side wall 42 defects from the main body 18 of the case 17 at full inflation of the airbag, the lower inflatable chamber 49 supports the upper inflatable chamber 44 in a stable manner such that the arresting area 46 of the upper inflatable chamber 44 properly deploys in front of the upper ends LU of the shins L and knees K.

In the second embodiment, the outer diameter D1 of the upper inflatable chamber 44 is configured at 198 mm, which is within a range of 150 to 220 mm, and the second tether 52 is configured such that the rear face 44a of the upper inflatable chamber 44 is partially located forward relative to that in the hypothetical configuration where the airbag 40A has no second tether 52 by the offset PL of 20 mm, which is within a range of 5 to 40 mm.

This configuration allows the upper inflatable chamber 44 to secure the outer diameter or thickness in the anteroposterior direction greater than 150 mm except for a region with no second tether 52, and therefore would not bottom out, that is, the knee-side wall 41 would not bump into the vehicle body side wall 42 backed up by the column cover 13 as part of vehicle, upon airbag inflation. Therefore, the upper inflatable chamber 44 will receive entire front faces of the vicinity of the upper ends LU of the shins L and the knees K. On the contrary, since the outer diameter D1 of the upper inflatable chamber 44 at full inflation does not surpass 220 mm, the inflatable chamber 44 is capable of entering into a gap C between the knees K and the column cover 13 smoothly even if it is narrow, and will not be likely to push back the knees K or upper ends LU of the shins L intensely at full inflation.

The second tether 52 will be of no significance if the forward travel distance or offset PL of the arresting area 46 by the second tether 52 is less than 5 mm. On the contrary, if the offset PL surpasses 40 mm, a wide area around the joint 41c of the rear end 52b of the second tether 52 to the knee-side wall 41 of the upper inflatable chamber 44 recesses forward in such a manner as to move a region of the arresting area 46 for receiving front faces of the knees K forward, and an area below the joint 41c bulges obliquely downward and rearward. Then a rear face 46b of the bulge below the joint 41c as indicated by double-dashed lines in Fig. 17B may apply pressure to shins L rather than knees K in cooperation with the rear face 49a of the lower inflatable chamber 49, which will inhibit an advantage of the configuration of the airbag 40A having a generally columnar knee-arresting portion 45 for receiving the knees K and upper ends LU of shins L without pressing the shins L. For these reasons the second tether 52 of the second embodiment is so configured that the forward travel distance or offset PL by the second tether 52 by which the arresting area 46 is partially located forward is 20 mm, which is within a range of 5 to 40 mm, so that the rear face 46a and the rear face 46b of the arresting area 46 of the knee-arresting portion 45 above and below the rear end 52b of the second tether 52 secure a wide area for receiving knees K and upper ends LU of shins L though they move slightly forward.

Although the gas communication holes 53 of the foregoing embodiments are round and formed on the first tether 51, the communication holes 53 may be formed into an oval or a polygon including a square such as a rectangle. It will also be appreciated that the communication holes 53 are comprised of gaps between the knee-side wall 41 and/or the vehicle body side wall 42 and edges of the tether 51 that is formed to be partially separated from the knee-side wall 41 and/or the vehicle body side wall 42. For example, it will be conceivable to configure the tether 51 such that left and right edges thereof are separated from left and right edges 40c and 40d in the interior of the airbag 40 such that gaps between edges of the tether 51 and an inner surface of the airbag 40 act as the gas communication holes 53.

Although the foregoing embodiments have been described as applied to the knee-protecting airbag apparatus S located below the steering column 9 for protecting knees K of a driver MD, the invention may be applied to an airbag for use in a knee-protecting airbag apparatus located in front of a front passenger's seat.

## Claims

1. An airbag (40, 40A) for knee protection adapted to be mounted on a low location in front of a seat of vehicle in a folded-up state inside a case (17) having an emergence opening (18a) oriented rearward for emergence from the emergence opening (18a) and deployment upward and rearward to protect knees (K) of a vehicle occupant (MD) when fed with inflation gas (G), the airbag (40, 40A) comprising:
an outer wall having a planar bag shape comprising a knee-side wall (41) for deployment toward the seat and a vehicle body side wall (42) continuing from an outer edge of the knee-side wall (41) for deployment in front of and facing the knee-side wall (41), the knee-side wall (41) and the vehicle body side wall (42) having same outer contours as are flattened; and
a first tether (51) connecting the knee-side wall (41) and vehicle body side wall (42) together inside the airbag (40, 40A) for controlling a thickness of the airbag (40, 40A) in an opposing direction of the walls (41, 42) upon airbag deployment, **characterized in that**:
the first tether (51) extends horizontally inside the airbag (40, 40A) to partition the airbag (40, 40A) into an upper inflatable chamber (44) and a lower inflatable chamber (49) that is located below the upper inflatable chamber (44) and is smaller in volume and thickness than the upper inflatable chamber (44) at full inflation of the airbag;
the first tether (51) is located at a location to defect from the case (17) at full deployment of the airbag;
the first tether (51) connects the knee-side wall (41) and vehicle body side wall (42) by a connecting distance (TL1) of 50 to 90 mm;
the upper inflatable chamber (44) has a generally columnar contour that extends in a transverse direction and has an outer diameter (D1) of 150 to 220 mm when the airbag (40, 40A) is fully inflated vertically by itself and acts as a knee-arresting portion (45) for receiving entire front faces of knees (K) to the vicinity of upper ends (LU) of shins (L) of the occupant (MD) upon airbag deployment;
the lower inflatable chamber (49) includes on the vehicle body side wall (42) a mounting portion (43) for attachment of the airbag (40, 40A) to the case (17) and is designed such that a top (49b) of a rear face (49a) of the lower inflatable chamber (49) projecting rearward in a thickness direction of the airbag is dislocated forward relative to a top (44b) of a rear face (44a) of the upper inflatable chamber (44) by 10 to 70 mm when the airbag (40, 40A) is fully inflated vertically by itself;
the airbag (40, 40A) further includes at a location of the first tether (51) a plurality of gas communication holes (53) for communicating the upper inflatable chamber (44) and lower inflatable chamber (49), the communication holes (53) being configured such that mainstreams (MG) of inflation gas (G) heading to the upper inflatable chamber (44) from the lower inflatable chamber (49) are located proximate both left and right ends of the airbag (40, 40A) so the upper inflatable chamber (44) inflates from left and right regions to the center; and
the knee-side wall (41) and the vehicle body side wall (42) are formed of base cloths (57) having a Frazier air permeability of 0. 6 L/cm²/min and below, wherein the base cloths (57) are made of woven fabric (58) having no coating for preventing gas leakage.

2. An airbag (40, 40A) for knee protection adapted to be mounted on a low location in front of a seat of vehicle in a folded-up state inside a case (17) having an emergence opening (18a) oriented rearward for emergence from the emergence opening (18a) and deployment upward and rearward to protect knees (K) of a vehicle occupant (MD) when fed with inflation gas (G), the airbag (40, 40A) comprising:
an outer wall having a planar bag shape comprising a knee-side wall (41) for deployment toward the seat and a vehicle body side wall (42) continuing from an outer edge of the knee-side wall (41) for deployment in front of and facing the knee-side wall (41), the knee-side wall (41) and the vehicle body side wall (42) having same outer contours as are flattened; and
a first tether (51) connecting the knee-side wall (41) and vehicle body side wall (42) together inside the airbag (40, 40A) for controlling a thickness of the airbag (40, 40A) in an opposing direction of the walls (41, 42) upon airbag deployment, **characterized in that**:
the first tether (51) extends horizontally inside the airbag (40, 40A) to partition the airbag (40, 40A) into an upper inflatable chamber (44) and a lower inflatable chamber (49) that is located below the upper inflatable chamber (44) and is smaller in volume and thickness than the upper inflatable chamber (44) at full inflation of the airbag;
the first tether (51) is located at a location to defect from the case (17) at full deployment of the airbag;
the first tether (51) connects the knee-side wall (41) and vehicle body side wall (42) by a connecting distance (TL1) of 50 to 90 mm;
the upper inflatable chamber (44) has a generally columnar contour that extends in a transverse direction and has an outer diameter (D1) of 150 to 220 mm when the airbag (40, 40A) is fully inflated vertically by itself and acts as a knee-arresting portion (45) for receiving entire front faces of knees (K) to the vicinity of upper ends (LU) of shins (L) of the occupant (MD) upon airbag deployment;
the lower inflatable chamber (49) includes on the vehicle body side wall (42) a mounting portion (43) for attachment of the airbag (40, 40A) to the case (17) and is designed such that a top (49b) of a rear face (49a) of the lower inflatable chamber (49) projecting rearward in a thickness direction of the airbag is dislocated forward relative to a top (44b) of a rear face (44a) of the upper inflatable chamber (44) by 10 to 70 mm when the airbag (40, 40A) is fully inflated vertically by itself;
the airbag (40, 40A) further includes at a location of the first tether (51) a plurality of gas communication holes (53) for communicating the upper inflatable chamber (44) and lower inflatable chamber (49), the communication holes (53) being configured such that mainstreams (MG) of inflation gas (G) heading to the upper inflatable chamber (44) from the lower inflatable chamber (49) are located proximate both left and right ends of the airbag (40, 40A) so the upper inflatable chamber (44) inflates from left and right regions to the center; and
the knee-side wall (41) and the vehicle body side wall (42) are formed of base cloths (57) having a Frazier air permeability of 0.6 L/cm²/min and below, wherein the gas communication holes (53) include:
a center hole (56) located proximate a center of the airbag in a transverse direction; and
each one end hole (54, 55) located proximate left and right ends of the airbag, each of which end holes having a greater opening area than the center hole (56).

3. Theairbag (40, 40A) forkneeprotectionof claim2, wherein
the gas communication holes (53) include a plurality of the center holes (56) disposed side by side along the transverse direction; and
a distance between a leftmost center hole (56) and a rightmost center hole (56) is greater than a transverse width (Wc) of the emergence opening (18a) of the case (17).

4. The airbag (40A) for knee protection of any one of claims 1 to 3, further comprising in the upper inflatable chamber (44) a second tether (52) that is connected to a joint (42b) of a front end (51a) of the first tether (51) to the vehicle body side wall (42) by a front end (52a) and connected to the vicinity of a vertically intermediate position (44c) between an upper end (41a) of the knee-side wall (41) of the upper inflatable chamber (44) and a joint (41b) of a rear end (51b) of the first tether (51) to the knee-side wall (41) and at least in the vicinity of a center (44d) of the knee-side wall (41) of the upper inflatable chamber (44) in the transverse direction by a rear end (52b) such that, at airbag inflation, an area around a joint (41c) of the second tether (52) to the knee-side wall (41) of the upper inflatable chamber (44) is located forward relative to a hypothetical top of the rear face (44a) of the upper inflatable chamber (44) in a hypothetical configuration where the airbag (40A) has no said second tether (52).

5. The airbag (40A) for knee protection of claim 4, wherein the second tether (52) is configured such that the rear face (44a) of the upper inflatable chamber (44) is partially located forward by 5 to 40 mm at full inflation of the airbag relative to that in the hypothetical configuration where the airbag has no said second tether (52).

6. The airbag (40A) for knee protection of claim 4 or 5, wherein
the airbag is a cut-and-sewn airbag that is formed by sewing a plurality of the base cloths (57) together; and
the front ends (51a, 52a) of the first tether (51) and the second tether (52) are sewn to the vehicle body side wall (42) by a same, single seam.

7. The airbag (40A) for knee protection of claim 6, wherein the second tether (52) is integral with a base cloth (60) for forming the vehicle body side wall (42) of the lower inflatable chamber (49).

8. The airbag (40A) for knee protection of any one of claims 4 to 7, wherein a width (WT) of the second tether (52) in the transverse direction is less than 400 mm.

## Patentansprüche

1. Airbag (40, 40A) für einen Knieschutz, der angepasst ist, an einer tiefen Position vor einem Sitz eines Fahrzeugs in einem zusammengefalteten Zustand innerhalb eines Gehäuses (17) montiert zu werden, das eine Austrittsöffnung (18a) aufweist, die für ein Austreten aus der Austrittsöffnung (18a) und für ein Entfalten nach oben und nach hinten rückwärtig ausgerichtet ist, zum Schutz der Knie (K) eines Fahrzeuginsassen (MD), wenn er mit Aufblasgas (G) gefüllt wird, wobei der Airbag (40, 40A) umfasst:
eine Außenwand mit einer planaren Beutelform, umfassend eine Knie-Seitenwand (41) für ein Entfalten in der Richtung des Sitzes und eine Fahrzeugkarosserie-Seitenwand (42), die sich von einer Außenkante der Knie-Seitenwand (41) fortsetzt, für ein Entfalten vor der Knie-Seitenwand (41) und auf die Knie-Seitenwand (41) gerichtet, wobei die Knie-Seitenwand (41) und die Fahrzeugkarosserie-Seitenwand (42) die gleichen Außenkonturen aufweisen, wenn sie zusammengefaltet sind, und
ein erstes Halteband (51), das die Knie-Seitenwand (41) und die Fahrzeugkarosserie-Seitenwand (42) innerhalb des Airbags (40, 40A) zum Einstellen einer Dicke des Airbags (40, 40A) in einer den Wänden (41, 42) gegenüber liegenden Richtung bei der Entfaltung des Airbags verbindet, **dadurch gekennzeichnet, dass**:
sich das erste Halteband (51) horizontal innerhalb des Airbags (40, 40A) erstreckt, so dass der Airbag (40, 40A) in eine obere aufblasbare Kammer (44) und eine untere aufblasbare Kammer (49), die sich unterhalb der oberen aufblasbaren Kammer (44) befindet und ein kleineres Volumen und eine geringere Dicke aufweist als die obere aufblasbare Kammer (44), wenn sich der Airbag im vollständig aufgeblasenen Zustand befindet, aufgeteilt wird,
sich das erste Halteband (51) an einer Position befindet, in der es von dem Gehäuse (17) bei der vollen Entfaltung des Airbags abgelenkt wird,
das erste Halteband (51) die Knie-Seitenwand (41) und die Fahrzeugkarosserie-Seitenwand (42) mit einem Verbindungsabstand (TL1) von 50 bis 90 mm verbindet,
die obere aufblasbare Kammer (44) eine im Allgemeinen säulenförmige Kontur aufweist, die sich in einer Querrichtung erstreckt und einen Außendurchmesser (D1) von 150 bis 220 mm aufweist, wenn der Airbag (40, 40A) durch sich selbst vollständig vertikal aufgeblasen ist und als ein Knie-Aufhalteabschnitt (45) zum Aufnehmen der vollständigen Vorderflächen von Knien (K) bis zu der Umgebung von oberen Enden (LU) von Schienbeinen (L) des Insassen (MD) bei der Entfaltung des Airbags wirkt,
die untere aufblasbare Kammer (49) auf der Fahrzeugkarosserie-Seitenwand (42) einen Montageabschnitt (43) zum Anbringen des Airbags (40, 40A) an dem Gehäuse (17) umfasst und so gestaltet ist, dass eine Oberseite (49b) einer Rückfläche (49a) der unteren aufblasbaren Kammer (49), die in einer Dickenrichtung des Airbags nach hinten vorragt, bezogen auf eine Oberseite (44b) einer Rückfläche (44a) der oberen aufblasbaren Kammer (44) um 10 bis 70 mm nach vorne verschoben ist, wenn der Airbag (40, 40A) durch sich selbst vollständig vertikal aufgeblasen ist,
der Airbag (40, 40A) ferner an einer Position des ersten Haltebands (51) eine Mehrzahl von Gasverbindungslöchern (53) zum Verbinden der oberen aufblasbaren Kammer (44) und der unteren aufblasbaren Kammer (49) umfasst, wobei die Verbindungslöcher (53) so ausgebildet sind, dass sich die Hauptströme (MG) des Aufblasgases (G), das von der unteren aufblasbaren Kammer (49) zu der oberen aufblasbaren Kammer (44) strömt, nahe sowohl an dem linken Ende als auch dem rechten Ende des Airbags (40, 40A) befinden, so dass sich die obere aufblasbare Kammer (44) von dem linken und dem rechten Bereich zur Mitte hin aufbläst, und
die Knie-Seitenwand (41) und die Fahrzeugkarosserie-Seitenwand (42) aus Grundgeweben (57) ausgebildet sind, die eine Frazier-Luftdurchlässigkeit von 0,6 L/cm²/min und weniger aufweisen, wobei die Grundgewebe (57) aus einem Gewebe (58) hergestellt sind, das keine Beschichtung zum Verhindern eines Gasaustritts aufweist.

2. Airbag (40, 40A) für einen Knieschutz, der angepasst ist, an einer tiefen Position vor einem Sitz eines Fahrzeugs in einem zusammengefalteten Zustand innerhalb eines Gehäuses (17) montiert zu werden, das eine Austrittsöffnung (18a) aufweist, die für ein Austreten aus der Austrittsöffnung (18a) und für ein Entfalten nach oben und nach hinten rückwärtig ausgerichtet ist, zum Schutz der Knie (K) eines Fahrzeuginsassen (MD), wenn er mit Aufblasgas (G) gefüllt wird, wobei der Airbag (40, 40A) umfasst:
eine Außenwand mit einer planaren Beutelform, umfassend eine Knie-Seitenwand (41) für ein Entfalten in der Richtung des Sitzes und eine Fahrzeugkarosserie-Seitenwand (42), die sich von einer Außenkante der Knie-Seitenwand (41) fortsetzt, für ein Entfalten vor der Knie-Seitenwand (41) und auf die Knie-Seitenwand (41) gerichtet, wobei die Knie-Seitenwand (41) und die Fahrzeugkarosserie-Seitenwand (42) die gleichen Außenkonturen aufweisen, wenn sie zusammengefaltet sind, und
ein erstes Halteband (51), das die Knie-Seitenwand (41) und die Fahrzeugkarosserie-Seitenwand (42) innerhalb des Airbags (40, 40A) zum Einstellen einer Dicke des Airbags (40, 40A) in einer den Wänden (41, 42) gegenüber liegenden Richtung bei der Entfaltung des Airbags verbindet, **dadurch gekennzeichnet, dass**:
sich das erste Halteband (51) horizontal innerhalb des Airbags (40, 40A) erstreckt, so dass der Airbag (40, 40A) in eine obere aufblasbare Kammer (44) und eine untere aufblasbare Kammer (49), die sich unterhalb der oberen aufblasbaren Kammer (44) befindet und ein kleineres Volumen und eine geringere Dicke aufweist als die obere aufblasbare Kammer (44), wenn sich der Airbag im vollständig aufgeblasenen Zustand befindet, aufgeteilt wird,
sich das erste Halteband (51) an einer Position befindet, in der es von dem Gehäuse (17) bei der vollen Entfaltung des Airbags abgelenkt wird,
das erste Halteband (51) die Knie-Seitenwand (41) und die Fahrzeugkarosserie-Seitenwand (42) mit einem Verbindungsabstand (TL1) von 50 bis 90 mm verbindet,
die obere aufblasbare Kammer (44) eine im Allgemeinen säulenförmige Kontur aufweist, die sich in einer Querrichtung erstreckt und einen Außendurchmesser (D1) von 150 bis 220 mm aufweist, wenn der Airbag (40, 40A) durch sich selbst vollständig vertikal aufgeblasen ist und als ein Knie-Aufhatteabschnitt (45) zum Aufnehmen der vollständigen Vorderflächen von Knien (K) bis zu der Umgebung von oberen Enden (LU) von Schienbeinen (L) des Insassen (MD) bei der Entfaltung des Airbags wirkt,
die untere aufblasbare Kammer (49) auf der Fahrzeugkarosserie-Seitenwand (42) einen Montageabschnitt (43) zum Anbringen des Airbags (40, 40A) an dem Gehäuse (17) umfasst und so gestaltet ist, dass eine Oberseite (49b) einer Rückfläche (49a) der unteren aufblasbaren Kammer (49), die in einer Dickenrichtung des Airbags nach hinten vorragt, bezogen auf eine Oberseite (44b) einer Rückfläche (44a) der oberen aufblasbaren Kammer (44) um 10 bis 70 mm nach vorne verschoben ist, wenn der Airbag (40, 40A) durch sich selbst vollständig vertikal aufgeblasen ist,
der Airbag (40, 40A) ferner an einer Position des ersten Haltebands (51) eine Mehrzahl von Gasverbindungslöchern (53) zum Verbinden der oberen aufblasbaren Kammer (44) und der unteren aufblasbaren Kammer (49) umfasst, wobei die Verbindungslöcher (53) so ausgebildet sind, dass sich die Hauptströme (MG) des Aufblasgases (G), das von der unteren aufblasbaren Kammer (49) zu der oberen aufblasbaren Kammer (44) strömt, nahe sowohl an dem linken Ende als auch dem rechten Ende des Airbags (40, 40A) befinden, so dass sich die obere aufblasbare Kammer (44) von dem linken und dem rechten Bereich zur Mitte hin aufbläst, und
die Knie-Seitenwand (41) und die Fahrzeugkarosserie-Seitenwand (42) aus Grundgeweben (57) ausgebildet sind, die eine Frazier-Luftdurchlässigkeit von 0,6 L/cm²/min und weniger aufweisen, wobei die Gasverbindungslöcher (53) umfassen:
ein zentrales Loch (56), das sich in der Nähe eines Zentrums des Airbags in einer Querrichtung befindet, und
wobei sich jedes Endloch (54, 55) in der Nähe des linken und des rechten Endes des Airbags befindet, wobei jedes der Endlöcher eine größere Öffnungsfläche als das zentrale Loch (56) aufweist.

3. Airbag (40, 40A) für einen Knieschutz nach Anspruch 2, bei dem
die Gasverbindungslöcher (53) eine Mehrzahl der zentralen Löcher (56) umfassen, die nebeneinander entlang der Querrichtung angeordnet sind, und
ein Abstand zwischen einem am weitesten links angeordneten zentralen Loch (56) und einem am weitesten rechts angeordneten zentralen Loch (56) größer ist als eine Breite in der Querrichtung (Wc) der Austrittsöffnung (18a) des Gehäuses (17).

4. Airbag (40A) für einen Knieschutz nach einem der Ansprüche 1 bis 3, der ferner in der oberen aufblasbaren Kammer (44) ein zweites Halteband (52) umfasst, das mit einer Verbindungsstelle (42b) eines vorderen Endes (51 a) des ersten Verbindungsbands (51) mit der Fahrzeugkarosserie-Seitenwand (42) durch ein vorderes Ende (52a) verbunden ist und mit der Umgebung einer vertikalen Zwischenposition (44c) zwischen einem oberen Ende (41a) der Knie-Seitenwand (41) der oberen aufblasbaren Kammer (44) und einer Verbindungsstelle (41 b) eines hinteren Endes (51 b) des ersten Haltebands (51) mit der Knie-Seitenwand (41) und mindestens in der Umgebung eines Zentrums (44d) der Knie-Seitenwand (41) der oberen aufblasbaren Kammer (44) in der Querrichtung durch ein hinteres Ende (52b) verbunden ist, derart, dass sich beim Aufblasen des Airbags ein Bereich um eine Verbindungsstelle (41c) des zweiten Haltebands (52) mit der Knie-Seitenwand (41) der oberen aufblasbaren Kammer (44) bezogen auf eine hypothetische Oberseite der hinteren Fläche (44a) der oberen aufblasbaren Kammer (44) in einer hypothetischen Konfiguration, bei welcher der Airbag (40A) kein derartiges zweites Halteband (52) aufweist, vorne befindet.

5. Airbag (40A) für einen Knieschutz nach Anspruch 4, bei dem das zweite Halteband (52) derart ausgebildet ist, dass die Rückfläche (44a) der oberen aufblasbaren Kammer (44) im vollständig aufgeblasenen Zustand des Airbags bezogen auf die Position in der hypothetischen Konfiguration, bei welcher der Airbag kein derartiges zweites Halteband (52) aufweist, teilweise um 5 bis 40 mm nach vorne verschoben ist.

6. Airbag (40A) für einen Knieschutz nach Anspruch 4 oder 5, wobei
der Airbag ein geschnittener und vernähter Airbag ist, der durch Vernähen einer Mehrzahl der Basisgewebe (57) ausgebildet worden ist, und
die vorderen Enden (51a, 52a) des ersten Haltebands (51) und des zweiten Haltebands (52) mit der Fahrzeugkarosserie-Seitenwand (42) durch die gleiche Einzelnaht vernäht sind.

7. Airbag (40A) für einen Knieschutz nach Anspruch 6, bei dem das zweite Halteband (52) mit einem Grundgewebe (60) zur Bildung der Fahrzeugkarosserie-Seitenwand (42) der unteren aufblasbaren Kammer (49) integriert ist.

8. Airbag (40A) für einen Knieschutz nach einem der Ansprüche 4 bis 7, bei dem die Breite (WT) des zweiten Haltebands (52) in der Querrichtung weniger als 400 mm beträgt.

## Revendications

1. Coussin d'air (40, 40A) pour la protection des genoux, adapté pour être monté sur un emplacement bas en face d'un siège de véhicule dans un état replié à l'intérieur d'une enceinte (17) ayant une ouverture de sortie (18a) orientée vers l'arrière pour une sortie de l'ouverture de sortie (18a) et un déploiement vers le haut et vers l'arrière pour protéger les genoux (K) d'un occupant de véhicule (MD) lorsqu'il est alimenté en gaz de gonflage (G), le coussin d'air (40, 40A) comprenant :
une paroi externe ayant une forme de sac planaire comprenant une paroi côté genoux (41) pour un déploiement vers le siège et une paroi côté carrosserie de véhicule (42) en se poursuivant à partir d'un bord externe de la paroi côté genoux (41) pour un déploiement devant et face à la paroi côté genoux (41), la paroi côté genoux (41) et la paroi côté carrosserie de véhicule (42) ayant les mêmes contours externes lorsqu'ils sont aplatis ; et
une première amarre (51) reliant la paroi côté genoux (41) et la paroi côté carrosserie de véhicule (42) à l'intérieur du coussin d'air (40, 40A) pour régler une épaisseur du coussin d'air (40, 40A) dans un sens opposé des parois (41, 42) lors du déploiement du coussin d'air, **caractérisé en ce que** :
la première amarre (51) s'étend horizontalement dans le coussin d'air (40, 40A) pour diviser le coussin d'air (40, 40A) en une chambre gonflable supérieure (44) et une chambre gonflable inférieure (49), qui est placée en dessous de la chambre gonflable supérieure (44) et a un volume et une épaisseur inférieurs à ceux de la chambre gonflable supérieure (44) lorsque le coussin d'air est complètement gonflé ;
la première amarre (51) est disposée dans un emplacement pour dévier de l'enceinte (17) à plein déploiement du coussin d'air ;
la première amarre (51) relie la paroi côté genoux (41) et la paroi côté carrosserie de véhicule (42) d'une distance de raccordement (TL1) de 50 à 90 mm ;
la chambre gonflable supérieure (44) a un contour généralement en forme de colonne qui s'étend dans une direction transversale et a un diamètre externe (D1) de 150 à 220 mm lorsque le coussin d'air (40, 40A) est complètement gonflé verticalement par lui-même et agit comme une portion de blocage de genoux (45) pour recevoir la totalité des faces avant des genoux (K) jusqu'au voisinage des extrémités supérieures (LU) des tibias (L) de l'occupant (MD) lors du déploiement du coussin d'air ;
la chambre gonflable inférieure (49) comprend sur la paroi côté carrosserie de véhicule (42) une portion de montage (43) pour fixer le coussin d'air (40, 40A) à l'enceinte (17) et est conçue de sorte qu'une partie supérieure (49b) d'une face arrière (49a) de la chambre gonflable inférieure (49) faisant saillie vers l'arrière dans le sens de l'épaisseur du coussin d'air soit disloquée vers l'avant par rapport à une partie supérieure (44b) d'une face arrière (44a) de la chambre gonflable supérieure (44) de 10 à 70 mm lorsque le coussin d'air (40, 40A) est complètement gonflé verticalement par lui-même ;
le coussin d'air (40, 40A) comprend en outre à un emplacement de la première amarre (51) une pluralité de trous de communication de gaz (53) pour faire communiquer la chambre gonflable supérieure (44) et la chambre gonflable inférieure (49), les trous de communication (53) étant configurés pour que les courants principaux (MG) de gaz de gonflage (G) menant à la chambre gonflable supérieure (44) depuis la chambre gonflable inférieure (49) se trouvent à proximité à la fois des extrémités gauche et droite du coussin d'air (40, 40A) de sorte que la chambre gonflable supérieure (44) se gonfle des régions gauche et droite vers le centre ; et
la paroi côté genoux (41) et la paroi côté carrosserie de véhicule (42) sont formées de toiles de base (57) ayant une perméabilité à l'air de Frazier de 0,6 L/cm²/min et moins, dans lequel coussin d'air les tissus de base (57) sont fabriqués en tissu tissé (58) n'ayant aucun revêtement pour empêcher une fuite de gaz.

2. Coussin d'air (40, 40A) pour la protection des genoux, adapté pour être monté sur un emplacement bas à l'avant d'un siège de véhicule dans un état replié à l'intérieur d'une enceinte (17) ayant une ouverture de sortie (18a) orientée vers l'arrière pour une sortie de l'ouverture de sortie (18a) et un déploiement vers le haut et vers l'arrière pour protéger les genoux (K) d'un occupant de véhicule (MD) lorsqu'il est alimenté en gaz de gonflage (G), le coussin d'air (40, 40A) comprenant :
une paroi externe ayant la forme d'un sac planaire comprenant une paroi côté genoux (41) pour un déploiement vers le siège et une paroi côté carrosserie de véhicule (42) en poursuivant d'un bord externe de la paroi côté genoux (41) pour un déploiement devant et face à la paroi côté genoux (41), la paroi côté genoux (41) et la paroi côté carrosserie de véhicule (42) ayant les mêmes contours externes lorsqu'ils sont aplatis ; et
une première amarre (51) reliant la paroi côté genoux (41) et la paroi côté carrosserie de véhicule (42) à l'intérieur du coussin d'air (40, 40A) pour régler une épaisseur du coussin d'air (40, 40A) dans un sens opposé des parois (41, 42) lors du déploiement du coussin d'air, **caractérisé en ce que** :
la première amarre (51) s'étend horizontalement dans le coussin d'air (40, 40A) pour diviser le coussin d'air (40, 40A) en une chambre gonflable supérieure (44) et une chambre gonflable inférieure (49), qui est placée en dessous de la chambre gonflable supérieure (44) et a un volume et une épaisseur inférieurs à ceux de la chambre gonflable supérieure (44) lorsque le coussin d'air est complètement gonflé ;
la première amarre (51) est disposée dans un emplacement pour dévier de l'enceinte (17) à plein déploiement du coussin d'air ;
la première amarre (51) relie la paroi côté genoux (41) et la paroi côté carrosserie de véhicule (42) d'une distance de raccordement (TL1) de 50 à 90 mm ;
la chambre gonflable supérieure (44) a un contour généralement en forme de colonne qui s'étend dans une direction transversale et a un diamètre externe (D1) de 150 à 220 mm lorsque le coussin d'air (40, 40A) est complètement gonflé verticalement par lui-même et agit comme une portion de blocage de genoux (45) pour recevoir la totalité des faces avant des genoux (K) au voisinage des extrémités supérieures (LU) des tibias (L) de l'occupant (MD) lors du déploiement du coussin d'air ;
la chambre gonflable inférieure (49) comprend sur la paroi côté carrosserie de véhicule (42) une portion de montage (43) pour fixer le coussin d'air (40, 40A) à l'enceinte (17) et est conçue de sorte qu'une partie supérieure (49b) d'une face arrière (49a) de la chambre gonflable inférieure (49) faisant saillie vers l'arrière dans le sens de l'épaisseur du coussin d'air soit disloquée vers l'avant par rapport à une partie supérieure (44b) d'une face arrière (44a) de la chambre gonflable supérieure (44) de 10 à 70 mm lorsque le coussin d'air (40, 40A) est complètement gonflé verticalement par lui-même ;
le coussin d'air (40, 40A) comprend en outre dans un emplacement de la première amarre (51) une pluralité de trous de communication de gaz (53) pour faire communiquer la chambre gonflable supérieure (44) et la chambre gonflable inférieure (49), les trous de communication (53) étant configurés pour que les courants principaux (MG) de gaz de gonflage (G) menant à la chambre gonflable supérieure (44) depuis la chambre gonflable inférieure (49) se trouvent à proximité à la fois des extrémités gauche et droite du coussin d'air (40, 40A) de sorte que la chambre gonflable supérieure (44) se gonfle des régions gauche et droite vers le centre ; et
la paroi côté genoux (41) et la paroi côté carrosserie de véhicule (42) sont formées de toiles de base (57) ayant une perméabilité à l'air de Frazier de 0,6 L/cm²/min et moins, dans lequel coussin d'air les trous de communication de gaz (53) comprennent :
un trou central (56) placé à proximité d'un centre du coussin d'air
dans une direction transversale ; et
chaque trou d'extrémité (54, 55) placé à proximité des extrémités gauche et droite du coussin d'air, chacun des trous d'extrémité ayant une surface d'ouverture supérieure à celle du trou central (56).

3. Coussin d'air (40, 40A) de protection des genoux selon la revendication 2, dans lequel
les trous de communication de gaz (53) comprennent une pluralité de trous centraux (56) disposés côte à côte le long de la direction transversale ; et
une distance entre un trou central le plus à gauche (56) et un trou central le plus à droite (56) est supérieure à une largeur transversale (Wc) de l'ouverture de sortie (18a) de l'enceinte (17).

4. Coussin d'air (40A) de protection des genoux selon l'une quelconque des revendications 1 à 3, comprenant en outre dans la chambre gonflable supérieure (44) une seconde amarre (52) qui est reliée à une articulation (42b) d'une extrémité avant (51a) de la première amarre (51) à la paroi côté carrosserie de véhicule (42) par une extrémité avant (52a) et reliée au voisinage d'une position verticalement intermédiaire (44c) entre une extrémité supérieure (41a) de la paroi côté genoux (41) de la chambre gonflable supérieure (44) et une articulation (41b) d'une extrémité arrière (51b) de la première amarre (51) à la paroi côté genoux (41) et au moins au voisinage d'un centre (44d) de la paroi côté genoux (41) de la chambre gonflable supérieure (44) dans la direction transversale par une extrémité arrière (52b) de sorte que, lors du gonflage du coussin d'air, une surface autour d'une articulation (41c) de la seconde amarre (52) à la paroi côté genoux (41) de la chambre gonflable supérieure (44) se trouve à l'avant par rapport à une partie supérieure hypothétique de la face arrière (44a) de la chambre gonflable supérieure (44) dans une configuration hypothétique où le coussin d'air (40A) n'a pas ladite seconde amarre (52).

5. Coussin d'air (40A) pour la protection des genoux selon la revendication 4, dans lequel la seconde amarre (52) est configurée de sorte que la face arrière (44a) de la chambre gonflable supérieure (44) soit en partie située à l'avant de 5 à 40 mm à plein gonflage du coussin d'air par rapport à celle de la configuration hypothétique où le coussin d'air n'a pas ladite seconde amarre (52).

6. Coussin d'air (40A) pour la protection des genoux selon la revendication 4 ou 5, dans lequel
le coussin d'air est un coussin d'air découpé et cousu qui est formé en cousant ensemble une pluralité de toiles de base (57) ; et
les extrémités avant (51a, 52a) de la première amarre (51) et de la seconde amarre (52) sont cousues à la paroi côté carrosserie de véhicule (42) par une seule et même couture.

7. Coussin d'air (40A) pour la protection des genoux selon la revendication 6, dans lequel la seconde amarre (52) est d'une seule pièce avec une toile de base (60) pour former la paroi côté carrosserie de véhicule (42) de la chambre gonflable inférieure (52).

8. Coussin d'air (40A) pour la protection des genoux selon l'une quelconque des revendications 4 à 7, dans lequel une largeur (WT) de la seconde amarre (52) dans la direction transversale est inférieure à 400 mm.
